# EUROPEAN PATENT SPECIFICATION

(11) **EP 1 396 979 B1**
(45) Date of publication and mention of the grant of the patent: **04.07.2012**
(21) Application number: 03255538.5
(22) Date of filing: 04.09.2003
(51) Int. Cl.: H04L 29/06

(54) **System and method for secure group communications**
Vorrichtung und Verfahren für sichere Gruppenkommunikation
Système et méthode pour communications de groupes sécurisés

(30) Priority: 04.09.2002 US 234223; 04.09.2002 US 234224
(43) Date of publication of application: 10.03.2004
(73) Proprietor: SECURE COMPUTING CORPORATION, Roseville, Minnesota 55113 (US)
(72) Inventor: Hanzlik, Robert Otto, Coon Rapids Minnesota 55433 (US); Lowe, Geoffrey, White Bear Lake, Minnesota 55110 (US); Markham, Thomas R., Anoka, Minnesota 55303 (US); Meredith, Lynn Marquette, Eagan, Minnesota 55123 (US)
(74) Representative: Collins, John David

(56) References cited:
- US-A- 2002 037 736
- P.MCDANIEL,A.PRAKASH, AND P.HONEYMAN: "Antigone: A Flexible Framework for Secure Group Communication" INTERNET, [Online] 23 May 1999 (1999-05-23), XP002276483 Retrieved from the Internet: <URL:http://antigone.eecs.umich.edu/public ations/usec99.pdf> [retrieved on 2004-04-06]
- MCDANIEL P ET AL: "Flexibly constructing secure groups in Antigone 2.0" DARPA INFORMATION SURVIVABILITY CONFERENCE & EXPOSITION II, 2001. DISCEX '01. PROCEEDINGS, vol. 2, 12 June 2001 (2001-06-12), pages 55-67, XP010548734
- H.HARNEY,A.COLEGROVE,E.HARDER,U.METH, AND R.FLEISCHER: "Group Secure Association Key Management Protocol" INTERNET ENGINEERING TASK FORCE, [Online] 30 June 2000 (2000-06-30), XP002276484 Retrieved from the Internet: <URL:http://www.watersprings.org/pub/id/dr aft-harney-sparta-gsakmp-sec-02.txt> [retrieved on 2004-04-06]
- J.ZAO,L.SANCHEZ,M.CONDELL,C.LYNN,M.FREDETT E,P.HELINEK,P.KRISHNAN,A.JACKSON,D.MANKINS ,M.SHEPARD AND S.KENT: "Domain Based Internet Security Policy Management" BBN TECHNOLOGIES INC., [Online] 31 December 1999 (1999-12-31), XP002276485 Retrieved from the Internet: <URL:www.ir.bbn.com/~krash/pubs/zao_discex 00.pdf> [retrieved on 2004-04-06]

## Description

### Field of the Invention

The present invention relates to data Security, and more particularly to secure group communications.

### Background of the Invention

There are a growing number of Internet users. In addition, there are a growing number of Internet applications that provide an array of services for these users. In such an environment, data security is often a concern. Users continually transmit and receive data over the Internet, and much of this data may be insecure. Unintended recipients may not only have access to the data but may also obtain information concerning the identity of the sendor(s).

The Internet Protocol is an addressing protocol designed to facilitate the routing of traffic in a network. The Internet Protocol is used on many computer networks, including the Internet. It is often desirable to protect information sent with the Internet Protocol using different types of security. Implementing Security with the Internet Protocol allows private or sensitive information to be sent over a network with a degree of confidence that the information will not be intercepted, examined, or altered.

Internet Protocol security (IPsec) is a protocol for implementing security for communications on networks using the Internet Protocol through the use of cryptographic key management procedures and protocols. By using IPsec, two endpoints can implement a Virtual Private Network (VPN). Communications between the two endpoints are made secure by IPsec on a packet-by-packet basis. IPsec entities at connection endpoints have access to, and participate in, critical and sensitive operations.

IPsec defines a set of operations for performing authentication and encryption at the packet level by adding protocol headers to each packet. IPsec also implements security associations to identify secure channels between two endpoints for a VPN. A security association is a unidirectional session between the two endpoints. Since a security association is unidirectional, a minimum of two security associations is required for secure, bi-directional communications between the two endpoints when using IPsec in a VPN.

VPN's could be called virtual private links. They provide great point-to-point security, but they do not scale well to support large groups. For example, assume a group of twelve users wishes to create their own private network overlay to provide secure collaboration. These twelve users need a cryptographically isolated network that allows each of the machines to communicate directly with any of the other machines in the group. If the group was using IPsec, they would need to establish (N*(N-1))/2 pairwise associations, where N is equal to twelve. IPsec and the associated IKE key management does not (and was never designed to) provide group management. IPsec also does not function well in an environment having Network Address Translation (NAT) devices.

For the reasons stated above, and for other reasons stated below which will become apparent to those skilled in the art upon reading and understanding the present specification, there is a need for the present invention.

"Antigone: A flexible Framework for Secure Group Communication" by P.McDaniel, A. Prakash & P. Honeyman, published on the internet at http://antigone.eecs.umich.edu/publications.usec99.pdf and dated 23 May 1999, discusses a system for creating secure group communications, and in particular for allowing secure and efficient IP multicasts. The system comprises a session leader (SL), a trusted third party (TTP) and individual group members. Group communications are encrypted with a 'session key' known to all members of the group, and private communications between the session leader and an individual group member are encrypted with a 'shared secret key', known only to them, and generated when the member joins the goup. The session leader distributes new session keys to group members.

"Flexibly Constricting Secure Groups in Antigone 2,0" by McDaniel et al, Darpa Information Survivability Conference & Exposition II, 2001, Discex '01 Proceeding, Vol 2, pages 55-67 (12 June 2001) discloses much the same as the 1999 Antigone document discussed above, with further disclosure of a more sophisticated security policy, including a new step of checking at a node the compliance between a local and global security policy.

"Group Secure Association Key Management Protocol" by H. Hamey et al and published on the internet at http://www.watersprings.org/pub/id/draft-harney-spartagsakmp-sec-02.txt discloses a proposed protocol for authenticating and key sharing for group communications over the internet, but does not disclose the use of sets of keys (rather than one group key) for traffic encryption.

"Domain Based Internet Security Policy Management" by J. Zao et al, and published on the internet at www.ir.bbn.com/-krash/pubs/zao_discex00.pdf discusses a distributed policy management system capable of managing the security policies for multiple security domains and resolving them into the security requirements for interdomain communication.

US2002/0037736 discloses a closed group communication network that is built up autonomously using a large number of unspecified communication terminals. A calling message including group identification information is broadcast to a large number of unspecified communication terminals from an arbitrary communication terminal. A response message including the group identification information is broadcast from at least one other communication terminal, and a closed communication network is formed. A group communication is performed using the group identification information.

### Summary of the Invention

One aspect of the present invention provides a method for exchanging secure data between a plurality of nodes configured as one or more virtual private groups, including a first node and a second node, the method comprising: receiving, on the first node, virtual private group membership data, from a policy server, wherein the virtual private group membership data is received over a secure connection, wherein the virtual private group membership data includes a group membership table for the node, a group membership key for key encryption, and a list of shared traffic encryption keys; accessing the group membership table on the first node, the group membership table having group membership information for each group, including a first group, to which the first node belongs and group security information associated with each group, wherein the first group has two or more members; checking the group membership table to determine if a second node is a member of the first group; and if the second node is a member of the first group, encrypting a data packet using a key from the list of shared traffic encryption keys (212) in the group security information associated with the first group, processing the encrypted data packet, and transmitting the encrypted data packet from the first node to the second node.

A further aspect of the present invention provides a node for exchanging secure data with a device within a virtual private group, the node comprising: a processor; a memory; and a computer-readable medium having computer-executable instructions stored thereon, the computer-executable instructions to be executed by the processor from the memory to: receive, on the node, virtual private group membership data, from a policy server, wherein the virtual private group membership data is received over a secure connection, wherein the virtual private group membership data includes a group membership table for the node, a group membership key for key encryption, and a list of shared traffic encryption keys; access the group membership table on the node, the group membership table having group membership information for each group, including a first group, to which the node belongs and group security information associated with each group, wherein the first group has two or more members; verify from the group membership table that the device is also a member of the first group; encrypt a data packet using a key from the list of shared traffic encryption keys (212) in the group security information associated with the first group; process the encrypted data packet; and transmit the encrypted data packet to the device.

A further aspect of the present invention provides a method of exchanging secure data with a device within a virtual private group, the method comprising: receiving, on the node, virtual private group membership data, from a policy server, wherein the virtual private group membership data is received over a secure connection, wherein the virtual private group membership data includes a group membership table for the node, a group membership key for key encryption, and a list of shared traffic encryption keys; accessing the group membership table on the node, the group membership table having groups membership information for each group, including a first group, to which the node belongs and group security information associated with each group, wherein the first group has two or more members; verifying from the group membership table that the device is also a member of the first group; encrypting a data packet using a key from the list of shared traffic encryption keys (212) in the group security information associated with the first group; processing the encrypted data packet; and transmitting the encrypted data packet to the device.

A method for implementing a virtual private group network includes creating a virtual private group definition on a policy server, establishing a plurality of secure connections between the policy server and a plurality of group nodes, sending a copy of the virtual private group definition from the policy server to the group nodes, sending a shared traffic encryption key from the policy server to each of the group nodes, and sharing secure communications information among the groups nodes using the shared traffic encryption key, wherein each group node is included in the virtual private group definition.

One embodiment of the invention comprises a method for centralised management of a virtual private group on a policy server. This method includes creating a virtual private group membership list on the policy server, adding a plurality of group members to the membership list, establishing a plurality of secure connection between the policy server and the group members, sending group member data from the policy server to sach of the group members, including sending a traffic encryption key list from the policy server to each of the group members, the traffic encryption key list having a plurality of traffic encryption keys, sending secure communication information from one group member to another group member by using one of the traffic encryption keys from the traffic encryption key list, and updating the group member data

In another embodiment, a method for transmitting secure data from a first node to a second node includes accessing a goup membership table on the first node, the group membership table having group membership information for each group, including a first group, to which the first node belongs and group security information associated with each group, wherein the first group has two or more members, and checking the group membership table to determine if the second node is a member of the first group. If the second node is a member of the first group, the method further includes encrypting a data packet using the group security information associated with the first group, processing the encrypted data packet, and transmitting the encrypted data packet from the first node to the second node.

In yet another embodiment, a method for receiving secure data on a first node that is sent from a second node includes accessing a group membership table on the first node, the group membership table having group membership information for each group, including a first group, to which the first node belongs and group security information associated with each group, wherein the first group has two or more members, and checking the group membership table to determine if the second node is a member of the first group. If the second node is a member of the fast group, the method further includes validating an encrypted data packet that has been sent from the second node, decrypting the encrypted data packet using the group security information associated with the first group, and processing the decrypted data packet.

These and other embodiments will be described in the detailed description below.

### Brief Description of the Drawing,

Figure 1A is a block diagram illustrating a system for secure group communications which may be used in one embodiment of the present invention.
Figure 1B is a block diagram illustrating an expanded view of one of the group nodes shown in Figure 1A.
Figure 1C is a block diagram illustrating an expanded view of another one of the group nodes which may be used in an embodiment of the present invention.
Figure 2 is a block diagram illustrating a Virtual Private Group (VPG) communication system which may be used in an embodiment of the present invention.
Figure 3A is a block diagram illustrating a system for secure communications which may be used in an embodiment of the present invention.
Figure 3B is a block diagram illustrating a system for secure communications having multiple policy servers which may be used in an embodiment of the present invention.
Figure 4 is a flow diagram illustrating a method for secure group communications.
Figure 5 is a flow diagram illustrating a method for implementing a VPG network.
Figure 6 is a flow diagram illustrating a method for centralized management of a VPG on a policy server.
Figure 7 is a system diagram illustrating a VPG node having a computer-readable medium.
Figure 8A is a data structure diagram illustrating a group security policy data structure used in an embodiment of the present invention.
Figures 8B-8E are data structure diagrams illustrating various node security policy data structures created from the group security policy data structure shown in Figure 8A.
Figure 9A is a network diagram illustrating the Open Systems Interconnection (OSI) seven-layer model.
Figure 9B is a layer diagram illustrating a Virtual Private Group (VPG) layer in a network model used in an embodiment of the invention.
Figure 9C is a block diagram illustrating a VPG and packet filtering model used in an embodiment of the invention.
Figure 10 is a flow diagram illustrating a method for transmitting secure data in a VPG according to an embodiment of the invention.
Figure 11 is a flow diagram illustrating a method for receiving secure data in a VPG in an embodiment of the invention.
Figure 12A is a network diagram illustrating a VPG system having multiple nodes which may be used in an embodiment of the invention.
Figure 12B is a packet diagram illustrating a packet-level flow of data in the VPG system shown in Figure 4A.
Figure 13A is a network diagram illustrating a VPG system having multiple nodes and a Network Address Translation (NAT) device which may be used in an embodiment of the invention.
Figure 13B is a packet diagram illustrating a first packet-level flow of data in the VPG system shown in Figure 5A.
Figure 13C is a packet diagram illustrating a second packet-level flow of data in the VPG system shown in Figure 5A.
Figure 14 is a network diagram illustrating a VPG system having multiple nodes and multiple NAT devices which may be used in an embodiment of the invention.

### Detailed Description

A system and method for secure group communications is described herein. In the following detailed description,reference is made to the accompanying drawings which form a part hereof, and in which are shown by way of illustration of specific embodiments in which the invention may be practiced. These embodiments are described in sufficient detail to unable those skilled in the art to practice the invention, and it is to be understood that other embodiments may be utilized and that structural, logical and electrical changes may be made without departing from the scope of the present invention. It is also to be understood that the various embodiments of the invention, although different, are not necessarily mutually exclusive. For example, a particular feature, structure or characteristic described in one embodiment may be included within other embodiments. The following description is, therefore, not to be taken in a limiting sense.

### Introduction

There are cases where groups of people from different organizations (i.e., administrative domains) work together to collaborate on a problem. Dynamic coalitions created to respond to a crisis are one example of a distributed collaborative environment. These groups need to clearly communicate a lot of information in a short time to respond to the crisis. Development teams from multiply corporations working on a product represent a typical commercial collaboration requirement. The collaboration tools may not provide adequate mechanisms to secure the various types of information exchanged among the group members.

An embodiment of a Virtual Private Group (VPG) communication system allows a group of computing devices to communicate securely, such that all communications between the group members are readable by all of the group members, but not readable by those outside of the group. In the embodiments, a group of two or more computing devices communicate securely over a network. The group of computing devices may, in one embodiment, be part of a wireless network, or, in another embodiment, may be part of a wired network. In a wireless network, the computing devices may include devices such as cellular telephones or personal digital assistants (PDA's).

In one embodiment, the VPG communication system supports peer-to-peer and broadcast communications within the defined group. That is, the VPG allows every member of a group to communicate with every other member of the group while providing data confidentiality, packet integrity, and source authentication. The structure of the VPG can be completely independent of the physical topology of the underlying network; VPG operation can be transparent to the host operating system and applications. In addition, the VPG provides a means of managing keys for the group that is simpler than building (N*(N-1))/2 pairwise connections, and the group management supports members joining and leaving the group. In addition, VPG members can exist behind a classic NAT (Network Address Translation) device. NAT acis as a gateway between a privale network and a public network. NAT provides the functionality to map the addressing mechanism between a computer and the external world. NAT requires that an intermediate device be placed between a group of one or more computers and the external network. In classic NAT with static address translation, global Internet Protocol (IP) addresses are assigned and mapped to specific private IP address behind the NAT device. Because a client inside such a private network always has the same global IP address, an outside client can call the inside client using that address. In classic NAT with dynamic address translation, the number of private IP addresses inside a network is greater than the number of available IP addresses outside the network. The dynamic translation process assigns IP addresses to outgoing packets based on a set of available outside addresses. An outside client is not able to send packets to an inside client, because it does not know the IP address of that client. VPG's work with both classic NAT having static address translation and classic NAT having dynamic address translation.

This embodiment as well as other embodiments of the invention, are further described below.

### Description

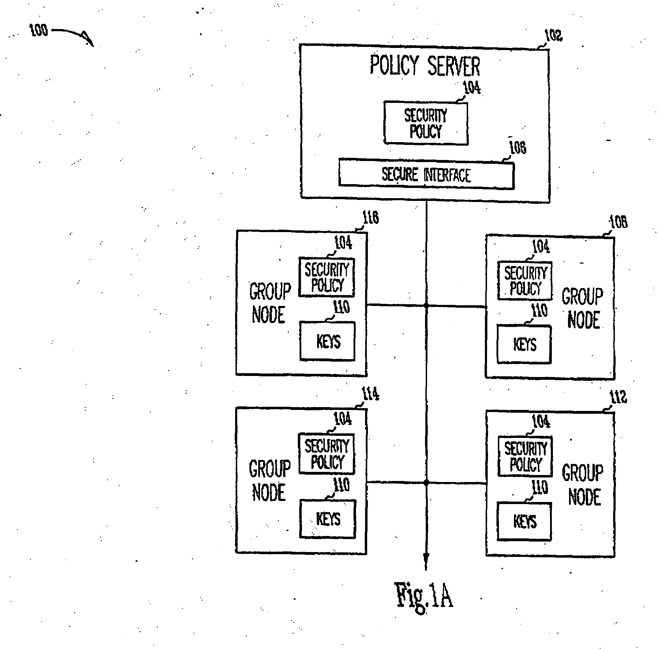

Figure 1A is a block diagram illustrating a system for secure group communications which may be used in one embodiment of the present invention. This shows centralized management of the secure group communications by a policy server. System 100 includes policy server 102 and group nodes 108, 112, 114, and 116. Policy server 102 and group nodes 108, 112, 114, and 116 are coupled to a communication network. Policy server 102 includes security policy 104 and secure interface 106. Each of the group nodes 108, 112, 114, and 116 are operatively coupled to secure interface 106 of policy server 102 through the communication network. In this fashion, policy server 102 commmunicates securely with the nodes. Each of the group nodes 108, 112, 114, and 116 include a copy of security policy 104 and a common set of encryption keys 110. In system 100, one of the group nodes is able to securely communicate with another group node by using a copy of security policy 104 and encryption keys 110.

Figure 1A shows group nodes 108, 112, 114, and 116 each having a copy of security policy 104. This policy has been transmitted from policy server 102. In other embodiments, policy server 102 transmits unique security policies to each of group nodes 108, 112, 114, and 116, wherein each unique security policy is tailored to the specific embodiment and operation of each group node. Each of these unique security policies are generated from security policy 104 maintained on policy server 102.

In one embodiment, one of the group nodes, such as group node 116, includes a host computer. In this embodiment, the host computer has a processor, a memory, and a computer-readable medium. The group node further includes a network interface device coupled to the host computer, the network interface device having a memory, a processor, and a computer-readable medium. In one embodiment, system 100 contains a distributes firewall as described in U.S. Patent Application Serial No.: 09/578,314, filed May 25, 2000, entitled: DISTRIBUTED FIREWALL SYSTEM AND METHOD, such that the network interface device is able to detect unauthorized packets. In some embodiments, the network interface device determines whether to further process or discard unauthorized packets by accessing the security policy. The memory of the network interface device includes both volatile and non-volatile memory. In one embodiment, the group node further includes an additional host computer coupled to the network interface device, the additional host computer also having a processor, a memory, and a computer-readable medium.

In one embodiment, the common set of encryption keys includes public encryption keys that are used for asymmetric encryption, Asymmetric encryption is also often referred to in the art as public-key encryption. In this form of encryption, both encryption and decryption are performed using two different keys, one being a private key and the other being a public key. The common set of encryption keys includes the public keys to be used in asymmetric encryption.

In one embodiment, the common set of encryption keys includes encryption keys that are used for symmetric encryption. Symmetric encryption is also known as conventional encryption . In this form of encryption, both encryption and decryption are performed using the same key.

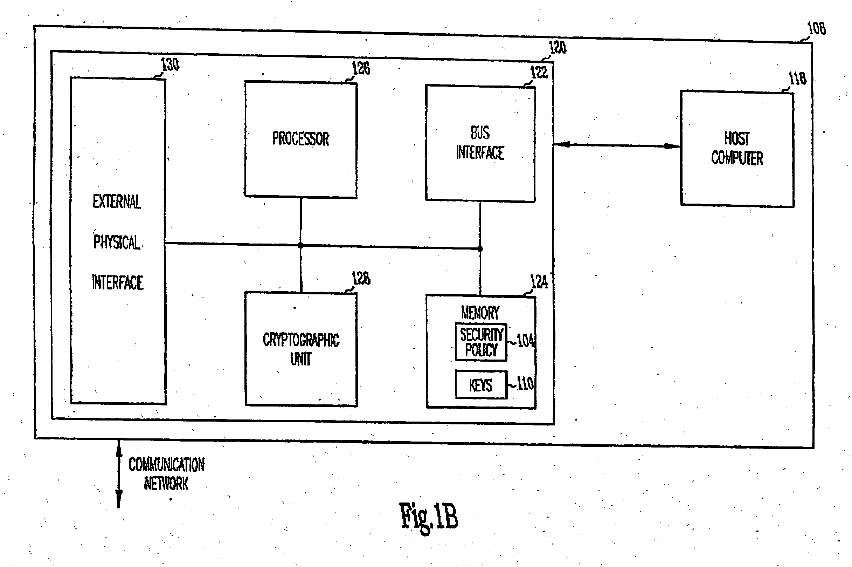

Figure 1B is a block diagram illustrating an expanded view of one of the group nodes shown in Figure 1A. Figure 1B shows, as an example, an expanded view of group node 108. However, in this embodiment of the invention, one or more of any of the group nodes could include the group node embodiment shown in Figure 1B. Group node 108 is coupled to a communication network. The communication network includes, in different embodiments, an Ethernet, an synchronous transfer mode (ATM), or a wireless communication network. Group node 108 includes host computer 118 coupled to network interface device 120. Network interface device 120 includes external physical interface 130, cryptographic unit 128, memory 124, bus interface 122, and processor 126. Bus interface 122 includes, in different embodiments, a Peripheral Component Interconnect (PCI), a Universal Serial Bus (USB), a Personal Computer Memory Card International Association (PCMCIA), or other non-PCI bus interfaces. Processor 126 includes, in different embodiments, a reduced instruction set computer (RISC), a complex instruction set computer (CISC), or very long instruction word (VLIW) processor. Each of these elements of network interface device 120 arc coupled to an internal communication network. Memory 124 includes both volatile and non-volatile memory. In one embodiment, the non-volatile memory includes a copy of security policy 104 and encryption keys 110. In one embodiment, a copy of security policy 104 is downloaded from policy server 102 at boot-time. Cryptographic unit 128 includes one or more cryptographic algorithms implemented by network interface device 120. These cryptographic algorithms include, in various embodiments, the Data Encryption Standard (DES) algorithm, the triple DES algorithm, the Advanced Encryption Standard (AES), and/or the Rivest-Shamir-Adelman (RSA) algorithm. Processor 126 processes information for cryptographic unit 128 and memory 124 to provide secure group communication functionality. The embodiment shown in Figure 1B (including its various embodiments) isolates this functionality, however, in network interface device 120, making it more tamper-resistant. The functionality is independent of host computer 118, and the software and/or operating system(s) running on host computer 118, meaning that the algorithms and keys cannot be easily changed, or compromised, by host computer 118.

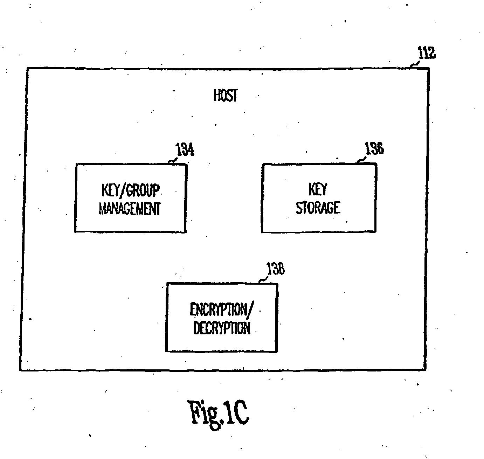

Figure 1C is a block diagram illustrating an expanded view of another one of the group nodes which may be used in another embodiment of the present invention. Figure 1C illustrates an alternative for a group node in system 100. In this embodiment, group node 112 includes a host unit that contains a software implementation. In different embodiments, the host unit may be a laptop, cellular phone, or (PDA). Group node 112 includes software components 134, 136, and 138. Software component 134 includes functionality for key and group management. Component 134 communicates with policy server 102 and receives the group membership information (included in security policy 104) and keys 110 for the group. This component also handles rolling over the session key (used in various embodiments), and adding/removing members from the group. Software component 136 includes functionality for key storage. Component 136 is responsible for storing keys 110. This includes session keys, as well as keys used to communicate with policy server 102. Software component 138 includes functionality for encryption and decryption. Component 13 8 is responsible for actually encrypting or decrypting packets, and may implement DES, triple DES, or AES algorithms (in various embodiments). There are advantages of the software embodiment shown in Figure 1C. Group node 112 (which includes the host unit) is capable of supporting small devices, such as cell phones and PDA's. A software embodiment is also less expensive to produce, because it does not require encryption hardware.

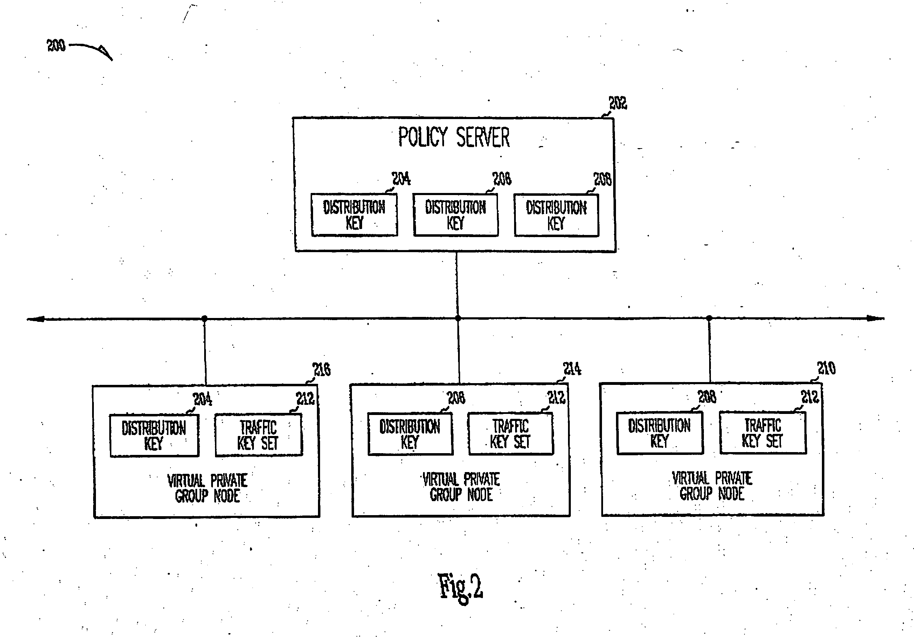

Figure 2 is a block diagram illustrating a Virtual Private Group (VPG) communication system which may be used in another embodiment of the present invention. In this embodiment, system 200 includes policy server 202 and a VPG having VPG nodes 210, 214, and 216. Policy server 202 and VPG nodes 210, 214, and 216 are coupled to a communication network. Policy server 202 includes key distribution keys 204, 206, and 208. VPG node 210 includes traffic encryption key set 212 and key distribution key 208. VPG node 214 includes traffic encryption key set 212 and key distribution key 206. VPG node 216 includes traffic encryption key set 212 and key distribution key 204. Traffic encryption key set 212 is shaped among all of the VPG nodes, and includes one or more traffic encryption keys. The VPG nodes send secure data to the other VPG nodes by using the shared traffic encryption keys.

In one embodiment, each VPG node receives its key distribution key and its shared traffic encryption key from policy server 202. In another embodiment, each VPG node generates the key distribution key and sends it to the policy server.

In one embodiment, policy server 202 further includes a security policy having rules for group node membership, and wherein policy server 202 transmits a copy of the security policy to each of the VPG nodes 210, 214, and 216.

In one embodiment, each VPG node further includes a shared group membership key that is transmitted from policy server 202. At least one of the VPG nodes 210, 214, and 216 includes a host computer coupled to the communication network through to network interface device. For these VPG nodes, the network interface device includes non-volatile memory, wherein the key distribution key, the shared traffic encryption key, and the shared group membership key of these VPG nodes are stored in the non-volatile memory of the network interface device. In one embodiment, the network interface device includes a cryptographic engine.

In one embodiment, policy server 202 is a manager for the VPG nodes within its security domain. It serves as a group membership controller that determines which nodes are members of which group. Policy server 202 may, in certain embodiments, be replicated for load sharing and high availability. Policy server 202 is the communication point between its own domain and other domains. The VPG nodes 210, 214, and 216 are the members of the VPG. In certain embodiments, the VTG nodes include Network Interface Cards (NIC's), software on host computers, or hardware devices outside of host computers. The VPG nodes receive group membership information, and other VPG parameters, from policy server 202. The VPG nodes use this information to encrypt and decrypt traffic.

In this embodiment, a key distribution protocol is used between policy server 202 and the VPG nodes to distribute the membership key and VPG parameters (such as membership lists and sets of traffic encryption keys) to the nodes. A VPG protocol is used between the VPG nodes to allow the nodes to send and receive encrypted traffic. The membership keys are key encryption keys that are shared by all members of a group. These keys are used for securing VPG control messages between VPG nodes. These control messages allow nodes to update VPG parameters in peer nodes without requiring the peer node to always be in contact with policy server 202. The key distribution keys are pairwise keys shared between policy server 202 and each node. Distribution key 204 is used to secure communications between policy server 202 and VPG node 216. Distribution key 206 is used to secure communications between policy server 202 and VPG node 214. And distribution key 208 is used to secure communications between policy server 202 and VPG node 210. The traffic encryption keys 212 are the keys used to encrypt the traffic sent between the VPG nodes. In certain embodiments, this may be Internet Protocol (IP) unicast, multicast, or broadcast. Traffic encryption keys 212 is a set of one or more keys on each VPG node. System 200 supports a smooth rollover scheme that allows the group to transition from one key within a set to another key without losing the ability to communicate during the transition.

The VPG nodes receive VPG parameters (such as a list of members by IP address, VPG traffic encryption keys, and membership key) from policy server 202. The VPG nodes then apply the membership list to packets being sent and received. If a packet is going to or coming from a member of the list (based upon IP address, in this embodiment), then the VPG traffic encryption key is applied to encrypt or decrypt the packet.

The receiver determines the packet was sent as part of the VPG, and it selects the appropriate VPG traffic encryption key and decrypts the packet. The node may, in some embodiments, apply additional processing to verify the integrity of the packet and apply authorization rules.

The amount of traffic encrypted in any one traffic encryption key is limited to prevent certain classes of cryptanalytic attacks. System 200 accomplishes this by distributing VPG traffic encryption keys 212 from policy server 202 to one or more of the VPG nodes 210, 214, and/or 216. Policy server 202 determines when the group should migrate to the next key in the set. It then sends a trigger message to one or more of the nodes in the VPG. telling them to begin using a newer key in the set of VPG traffic encryption keys 212.

The VPG node responds by sending traffic using the newer key. This is indicated to the receiver by incrementing the key index contained in the packet. The receiver looks at the key index, and uses the newer key to decrypt the packet. If the packet decryption is successful, the receiver marks the key just used as the current VPG traffic encryption key. It then uses this key to encrypt all outbound traffic. Policy server 202 distributes sets of traffic encryption keys 212 to the group. Thus, there is no loss of communications as nodes rollover from the older traffic encryption key to the newer key. This scheme is unique in that it allows nodes to gradually learn that they need to shift to the new key instead of forcing every node to switch the new key at the same time. This accommodates nodes that may have been "off the network" for some reason (e.g. a laptop is unplugged).

Occasionally a node (that is still a member of the group) will not communicate with policy server 202 for such a long period of time that other members of the group have moved to a new key set while the "out of touch" node is still using the old VPG traffic encryption key set. When this occurs, the more "up to date" nodes will have discarded old VPG traffic encryption keys but they will still have the same membership key. System 200 contains a unique mechanism for bringing the nodes up to the same version of the key set. The example below illustrates the operation.

If VPG node 210 receives a packet from fellow VPG node 214 that it cannot decrypt, it returns an error message to sending VPG node 214. This error message contains the current key set being used by node 210 along with version information. When node 214 receives this error message, it decrypts it with the membership key and recovers the key set being used by the peer, node 210. If the version information indicates that the key set is newer than what node 214 is using, then node 214 replaces its VPG traffic encryption keys with the newer set. If however, the node 214 actually has a newer version, then it sends its current key set to node 210 along with version information. Thus, whichever node is out of date is updated and the two nodes can communicate again. This update can take place even if neither node is able to communicate with policy server 202.

When membership in the group changes, policy server 202 distributes a new membership key, a new set of VPG traffic encryption keys 212, and a new membership list to each node. This ensures that an ejected member of the group is not able to trick other nodes into giving it the current key set.

In some embodiments, members of the VPG may not be under the direct control of a single policy server. When this occurs, the policy servers responsible for the respective nodes communicate with each other via a policy server-to-policy server protocol to negotiate group membership, keys, and other VPG parameters.

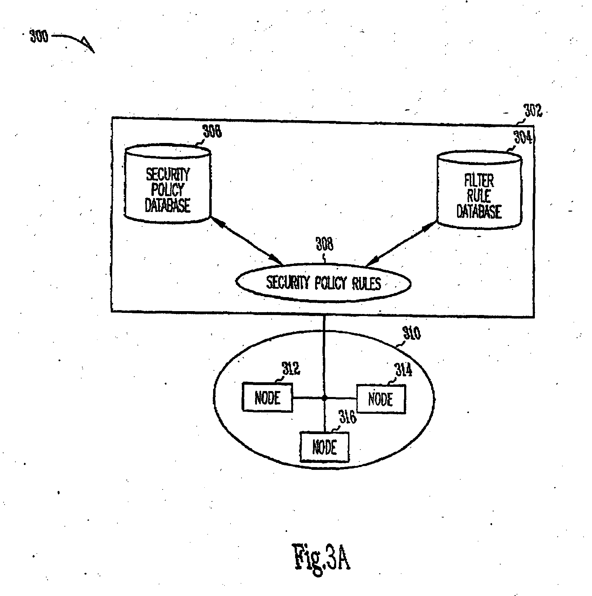

Figure 3A is a block diagram illustrating a system for secure communications that may be used in another embodiment of the present invention. System 300 includes a network, policy server system 302 coupled to the network, and group 310 coupled to the network. Policy server system 302 includes security policy database 306 and filter rule database 304. Policy server system 302 uses security policy database 306 and filter rule database 304 to create security policy rules 308. Group 310 includes node 312, node 314, and node 316, each of which is coupled to the network. Policy server system 302 transmits security policy rules 308 to the nodes of group 310. Nodes 312, 314, and 316 of group 310 use a common set of encryption keys, and the nodes communicate securely with one another by using security policy rules 308 and the common set of encryption keys to encrypt and decrypt data that is transmitted across the network.

In one embodiment, nodes 312, 314, and 316 of group 310 each have a packet filter to detect unauthorized packets in the data as a function of security policy rules 308. In certain embodiments, system 300 provides an integrated VPG and packet filtering policy framework. For example, if a node is a member of a VPG, a first filter policy is used for detecting unauthorized packets. If the node is not a member of the VPG, then a second filter policy is used.

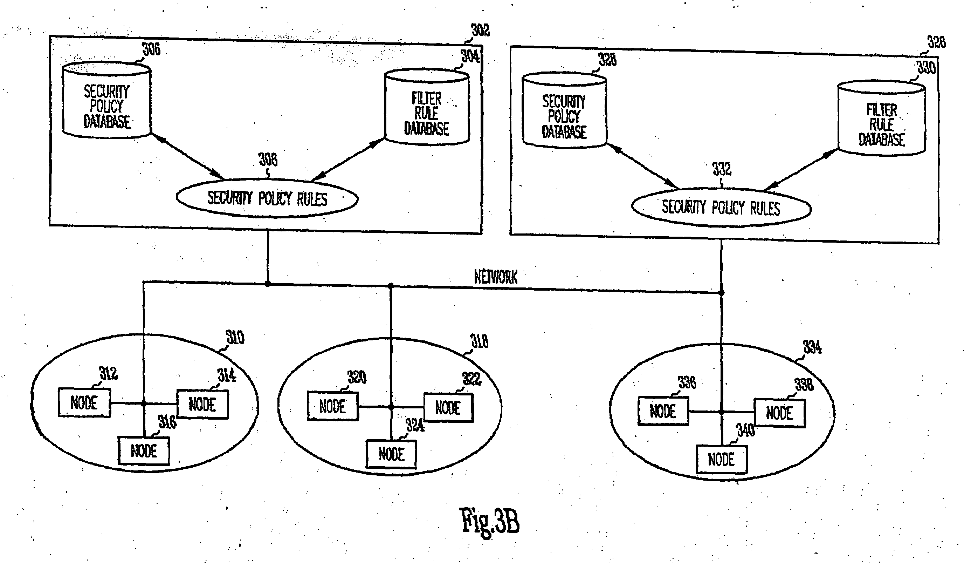

Figure 3B is a block diagram illustrating a system for secure communications having multiple policy servers that may be used in another embodiment of the present invention. This embodiment provides capability for interdomain VPG's. In this embodiment, policy server system 302 is further coupled to group 318 via the network. Group 318 includes node 320, node 322, and node 324, each of which is coupled to the network. Policy server system 302 transmits security policy rules 308 to nodes 320, 322, and 324 of group 318. The nodes of group 318 use a common set of encryption keys for group 318, and the nodes communicate securely with one another by using security policy rules 308 and the common set of encryption keys for group 318 to encrypt and decrypt data that is transmitted across the network.

The system shown in Figure 3B further includes policy server system 326 coupled to the network and group 334 also coupled to the network. Policy server system 326 includes security policy database 328 and filter rule database 330. Policy server system 326 uses security policy database 328 and filter rule database 330 to create security policy rules 332. Group 334 includes nodes 336, 338, and 340, which are each coupled to the network, Policy server system 326 transmits security policy rules 332 to nodes 336, 338, and 340 of group 334. Nodes 336, 338, and 340 of group 334 use a common set of encryption keys, and communicate securely with one another by using security policy rules 332 and the common set of encryption keys to encrypt and decrypt data that is transmitted across the network.

In this embodiment, policy server system 326 and policy server system 302 are coupled via the network, and have the capability to implement interdomain VPG's (wherein each policy server system manages its security domain). Policy server system 302 manages group 310 and group 318, and policy server system manages group 334. Policy server system 302 is able to communicate with policy server system 326 via a policy server-to-policy server protocol, to manage operations between group 310, 318, and 334. In the embodiment shown in Figure 3B, the nodes are each shown to be a member of a distinct group. In other embodiments, however, an individual node may be a member of two or more separate VPG's that arc managed by one or more policy server systems.

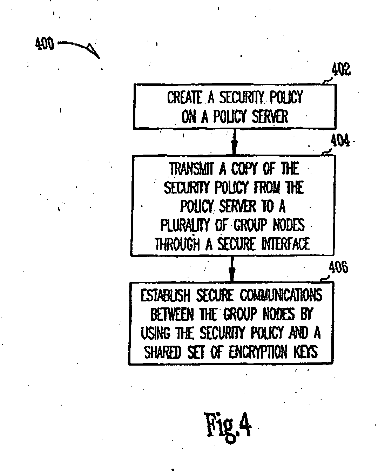

Figure 4 is a flow diagram illustrating a method for secure group communications which maybe used in an embodiment of the present invention. Flow diagram 400 includes creating a security policy on a policy server at 402. At 404, flow diagram 400 includes transmitting a copy of the security policy from the policy server to a number of goup nodes through a secure interface. At 406, flow diagram includes establishing a secure communications between the group nodes by using the security policy and a shared set of encryption keys. In one embodiment, the shared set of encryption keys includes a list of shared traffic encryption keys. A group node uses one of the shared traffic encryption keys and the security policy to establish secure communications with another group node.

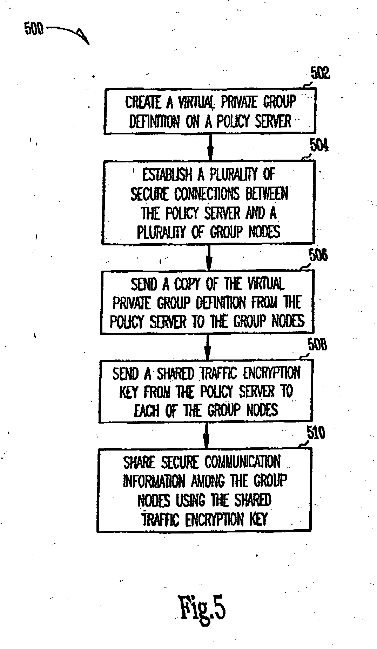

Figure 5 is a flow diagram illustrating a method for implementing a VPG network which may be used in another embodiment of the present invention. Flow diagram 500 includes creating a VPG definition on a policy server at 502. At 504, flow diagram 500 includes establishing a number of secure connections between the policy server and a number of group nodes. At 506, flow diagram 500 includes sending a copy of the VPG definition from the policy server to the group nodes. At 508, flow diagram 500 includes sending a shared traffic encryption key from the policy server to each of the group nodes. At 510, flow diagram 500 includes sharing secure communication information among the group nodes using the shared traffic encryption key. Bach group node is included in the VPG definition.

In one embodiment, the sharing of secure communication information includes detecting unauthorized communication information using a packet filter.

In one embodiment, the sharing of secure communication information includes using a shared group membership key. In this embodiment, each of the group nodes use the shared group membership key to achieve secure group communications.

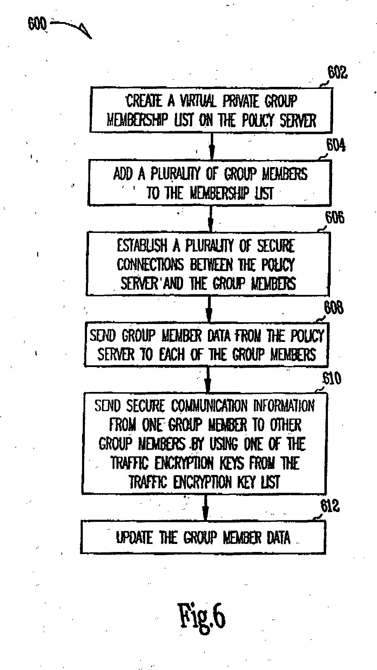

Figure 6 is a flow diagram illustrating a method for centralized management of a VPG on a policy server which may be used in another embodiment of the present invention. Flow diagram 600 includes creating a VPG membership list on the policy server at 602. At 604, flow diagram 600 includes adding a number of group members to the membership list. At 606, flow diagram 600 includes establishing a number of secure connections between the policy server and the group members. At 608, flow diagram 600 includes sending group member data from the policy server to each of the group members, including sending a traffic encryption key list from the policy server to each of the group members. The traffic encryption key list has a number of traffic encryption keys. At 610, flow diagram 600 includes sending secure communication information from one group member to another group member by using one of the traffic encryption keys from the traffic encryption key list. At 612, flow diagram 600 includes updating the group member data.

In one embodiment, the sending of group member data includes sending a copy of the membership list from the policy server to each of the group members.

In one embodiment, the sending of group member data includes sending a membership key from the policy server to each of the group members.

In one embodiment, the updating of the group member data includes sending a secure message from the policy server to one group member to indicate that all group members must use a new traffic encryption key from the traffic encryption key list, and sending secure communication information from the one group member to another group member by using the new traffic encryption key.

In one embodiment, the updating of the group member data includes changing the number of group members in the membership list on the policy server, sending an updated copy of the membership list from the policy server to each of the group members, sending a new membership key from the policy server to each of the group members, and sending a new traffic encryption key list from the policy server to each of the group members. In one embodiment, the changing of the number of group members in the membership list includes adding a new group member to the membership list. In one embodiment, the changing of the number of group members in the membership list includes removing one of the group members from the membership list. In this embodiment, a members that has been removed from the group will not have access to the new membership key or new traffic encryption key list, thereby protecting the security of the VPG.

In one embodiment, the updating of the group member data includes sending a secure message from the policy server to all of the group members to indicate that they must use a new traffic encryption key from the traffic encryption key list, and sending secure communication information from one group member to another group member by using the new traffic encryption key.

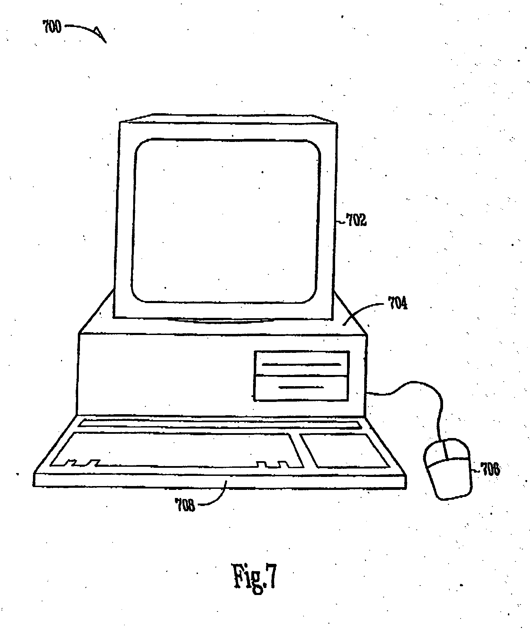

Figure 7 is a system diagram illustrating a VPG node which may be used in an embodiment of the invention. Figure 7 shows just one example of a VPG node. Node 700 includes display 702, processing unit 704, pointing device 706, and keyboard 708. Processing unit 704 is operatively coupled to display 702, pointing device 706, and keyboard 708. Processing unit 704 includes a processor, a memory, and one or more storage devices. The memory, in certain embodiments, includes both random-access memory, (RAM) and read-only Memory (ROM). The one or more storage devices, in certain embodiments, include a hard disk drive, a floppy disk drive, an optical disk drive, and/or a tape cartridge drive. Therefore, processing unit 704 induces one or more computer-readable media having computer-executable instructions stored thereon,the computer-executable instructions to be executed by the processor from the memory to perform methods of operation of various embodiments of the present invention.

In one embodiment, node 7.00 also includes a network interface device coupled to processing unit 704, the network interface device having a processor, a memory, and a computer-readable medium containing computer-executable instructions stored thereon, the computer-executable instructions to be executed by the processor of the network interface device from the memory of the network interface device to perform methods of operation of various embodiments of the present invention.

In other embodiments, VPG nodes operate in a wireless network. In these embodiments, the VPG nodes may comprise cellular phones, PDA's, and tho like.

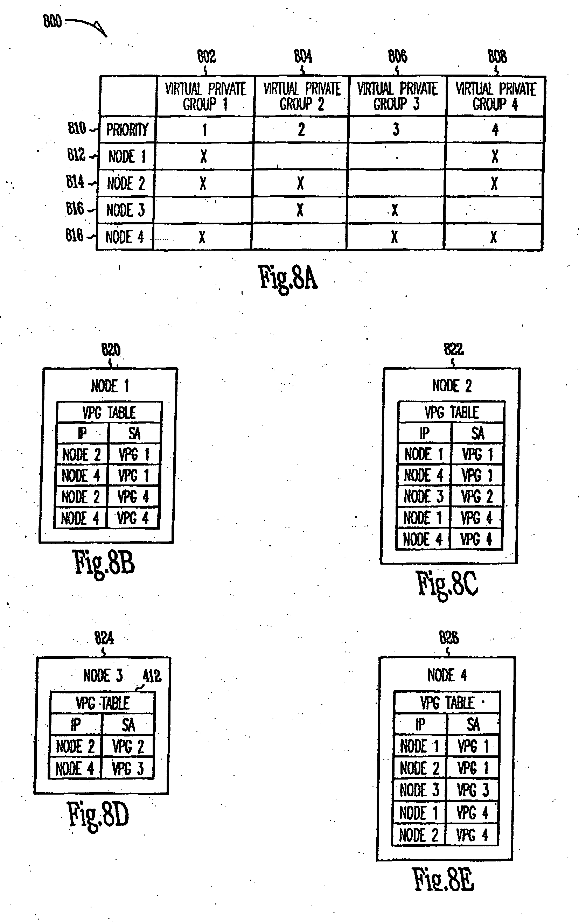

Figure 8A is a data structure diagram illustrating a group security policy data structure which may be used in an embodiment of the present invention. In this embodiment, group security policy data structure 800 is stored on a computer-readable medium. Group security policy data structure 80D is part of the overall security policy that is implemented by a policy server.

In this embodiment, group security policy data structure 800 includes a number of node entries, a number of priority identifiers, and a number of VPG definitions, wherein each VPG definition includes a number of the node entries, and wherein each VPG definition includes one of the priority identifiers. Group security policy data structure 800 includes node entry 812 ("node 1"), node entry 814 ("node 2"), node entry 816 ("node 3"), and node entry 818 ("node 4"). Priority identifiers 810 include "priority 1," "priority 2," "priority 3," and "priority 4." VPG definition 802 ("VPG 1") includes "priority, 1," and also includes "node 1," "node 2," and "node 4." VPG definition 804 ("VPG 2") includes "priority 2," and also includes "node 2" and "node 3." VPG definition 806 ("VPG 3") includes "priority 3," and also includes"node 3" and "node 4." VPG definition 808 ("VPG 4") includes "priority 4," and also includes "node I," "node 2," and "node 4." Group security policy data structure 800 illustrates how an individual node can be a member of multiple VPG's. "Node 1" is a member of "VPG 1" and "VPG 4." "Node 2" is a member of "VPG 1," "VPG 2," and "VPG 4." "Node 3" is a member of "VPG 2" and "VPG 3." And, "node 4" is a member of "VPG 1," "VPG 3," and "VPG 4." By implementing priority identifiers 810, group security policy data structure 800 also illustrates how, in one embodiment, a policy server can determine the most appropriate VPG for a given set of nodes. VPG's of "priority 1" have the highest priority in this portion of the security policy. Thus, if the policy server is attempting to identity the most appropriate VPG for "node 1" and "node 2," it would identify "VPG 1." VPG 1" includes both "node 1" and "node 2," and it has "priority 1." . Although "VPG 4" also includes both "node 1" and "node 2," "VPG 4" has only "priority 4," which is a lower priority than the "priority 1" of"VPG 1." Similarly, if the policy server is attempting to identify the most appropriate VPG for "node 1," "node 2," and "node 4," it would identify "VPG 1" rather than "VPG 4." By using group security policy data structure 800, the policy server can manage the VPG's, and group membership to the VPG's.

In some embodiment, node entry 812 of group security policy data structure 800 includes a user identification. In other embodiments, node entry 814 includes a machine identification. In other embodiments, node entry 816 includes one or more Internet Protocol (IF) addresses. In other embodiments, node entry 818 includes an IP subnet with an exclusion identifier. In such embodiments, node entry 818 is used to securely transmit data to an entire IP subnet, while excluding one or more of the addresses. For example, in one embodiment, node entry 818 could include an IP subnet of "172.16.1.*" and an exclusion identifier of "172.16.1.44." In this instance, node entry 818 includes the IP subnet of "172.16.1.*" except for the specific address of "172.16.1.44." Thus, the specific address of "172.16.1.44" is excluded from any of the VPG's of which node entry 818 is a member.

Figures 8B-8E arc data structure diagrams illustrating various node security policy data structures created from the group security policy data structure shown in Figure 8A. Figure 8B shows node security policy data structure 820 for "node 1." In certain embodiments, a policy server creates individual node security policy data structure 820 from group security policy data structure 800, and transmits structure 820 to "node 1.' Structure 820 is particular to "node 1," and includes a VPG Table that has information about each of the VPG's to which "node 1" belongs. The information includes one or more entries having Internet Protocol (IP) address and security association (SA) data for members of the VPG's. "Node 1" is a member of "VPG 1" and "VPG 4", and therefore the VPG Table in structure 820 contains IP address and SA information for the other nodes in these VPG's. "Node 2" and "node 4" are listed members of "VPG 1," and "node 2" and "node 4" are also listed members of "VPG 4." In certain embodiments, VPG priority is established in a top-down approach. If "node 1" wants to transmit secure information to "node 2" and "node 4," it will look in its VPG Table, to find the highest-priority VPG that includes these nodes. As shown in Figure 8B, "VPG 1" is the highest-priority VPG (when searched in a top-down fashion) that includes both "node 2" and node 4." Other embodiments may implement a bottom-up search priority implementation. In these embodiments, "VPG 4" would be the highest priority VPG that includes both "node 2" and "node 4."

Figures 8C-8E show similar node security policy data structures 822, 824, and 826 for "node 2," "node 3," and "node 4," respectively. In certain embodiments, a policy server creates these individual node security policy data structures 822, 824, and 826 from group security policy data structure 800, and transmits these structures to "node 2," "node 30" and "node 4," respectively.

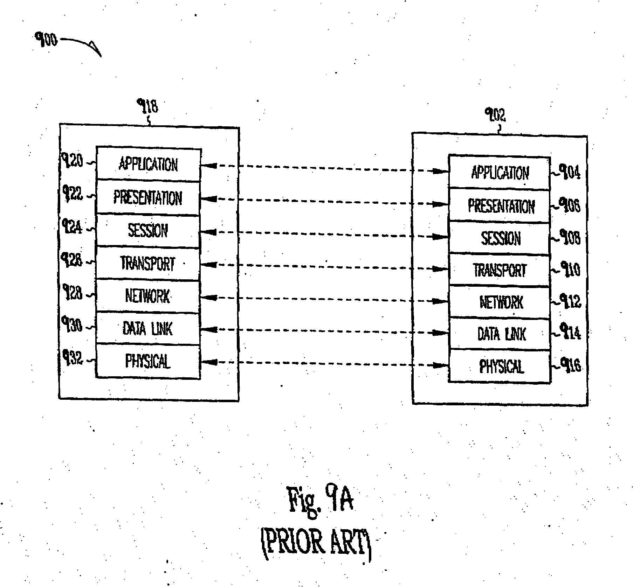

Further devices in a network use protocols to communicate. A protocol is a set of rules and conventions between the communicating participants. Since the protocols are often complex, they are designed in layers, to make their implementations more manageable. The Open Systems Interconnection (OSI) model is a seven-layer model for network communications. It provides a framework in which standards can be developed for the services and protocols at each layer. Figure 9A is a network diagram illustrating the OSI seven-layer model. In Figure 9A, network 900 includes system 902 and system 918. Both system 902 and system 918 include a device that implements a seven-layer communication stack according to the OSI model. Physical layer 932 of system 918 is coupled to physical layer 916 of system 900. In order for an application in system 902 to communicate with an application in system 918, each application must use a set of common layers in the seven-layer stack. Data is sent through each applicable layer of the stack in one system, and subsequently received through each applicable layer of the stack in the other system. Each layer adds different overhead and functionality. As a result, application layer 904 in system 902 is operatively coupled to, and effectively communicates with, application layer 920 in system 918. In an implementation where all seven layers are used, presentation layer 906 of system 902 is operatively coupled to presentation layer 922 of system 918. Session layer 908 of system 902 is operatively coupled to session layer 924 of system 918. Transport layer 910 of system 902 is operatively coupled to transport layer 926 of system 918. Network layer 912 of system 902 is operatively coupled to network layer 928 of system 918. Data link layer 914 of system 902 is operatively coupled to data link layer 930 of system 918, and physical layer 916 of system 902 is coupled to, and directly interchanges data with, physical layer 132 of system 918. In this fashion, two systems effectively communicate with one another at the application level by implementing layers of the OSI stack.

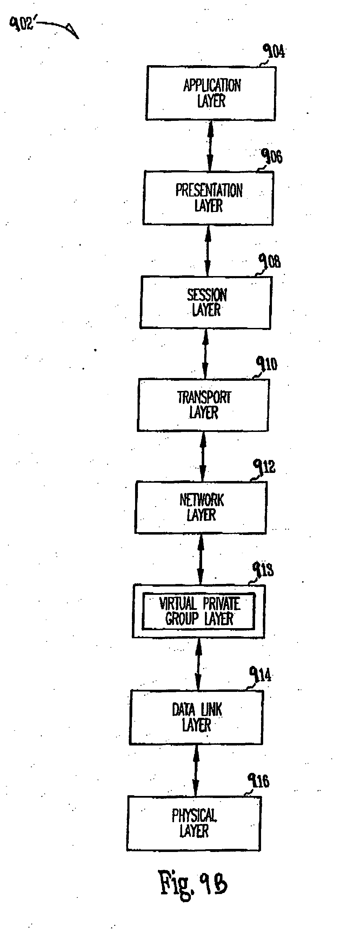

Figure 9B is a layer diagram illustrating a Virtual Private Group (VPG) layer in a network model which may be used in an embodiment of the invention. In this embodiment, system 902' is modified to include an additional layer in the network model. The additional layer is Virtual Private Croup (VPO) Layer 913. VPG Layer 913 is located between Network Layer 912 and Data Link Layer

914. VPG Layer 913 adds a layer of encryption and authentication of data packets that are transmitted through the communication stack. In order for system 902' to communicate securely with another system that is also a member of a Virtual Private Group, the other system must also implement the added VPG Layer in its communication stack.

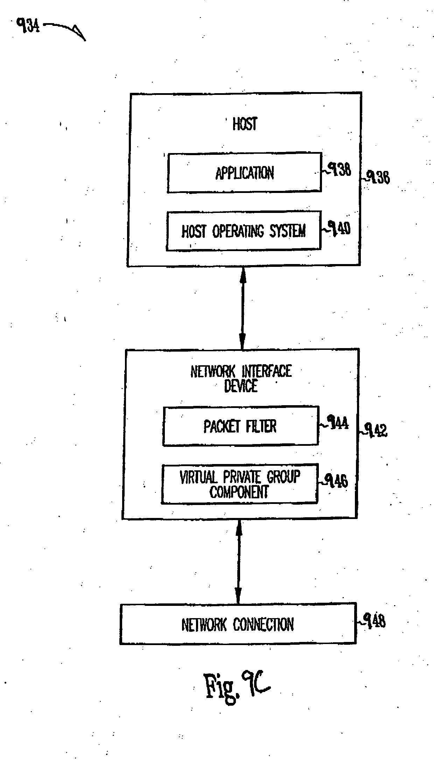

Figure 9C is a block diagram illustrating a VPG and packet filtering model which may be used in an embodiment of the invention. This embodiment shows how a VPG implementation can be integrated with a packet filtering implementation in a communication model. In this embodiment, system 934 includes host 936, network interface device 942, and network connection 948. Host 936 is coupled to network interface device 942, and network interface device 942 is coupled to network connection 948. In one implementation, network connection 948 is an Ethernet network connection. Host 936 includes application 938, and host operating system 940. Application 938 operates on host operating system 940, and host 936 implements one or more communication layers to communicate with network interface device 942. In one embodiment, network interface device 942 includes packet filter 944, and VPG component 946. In this fashion, network interface device 942 has the capability to implement both packet filtering and VPG encryption/decryption. Tn such an embodiment, VPG encryption/decryption is transparent to application 938 and host operating system 940. Packet filtering is applied to the plaintext. Network connection 948 communicates with a network. The network can be implemented as a wired or wireless network. The network medium is not relevant.

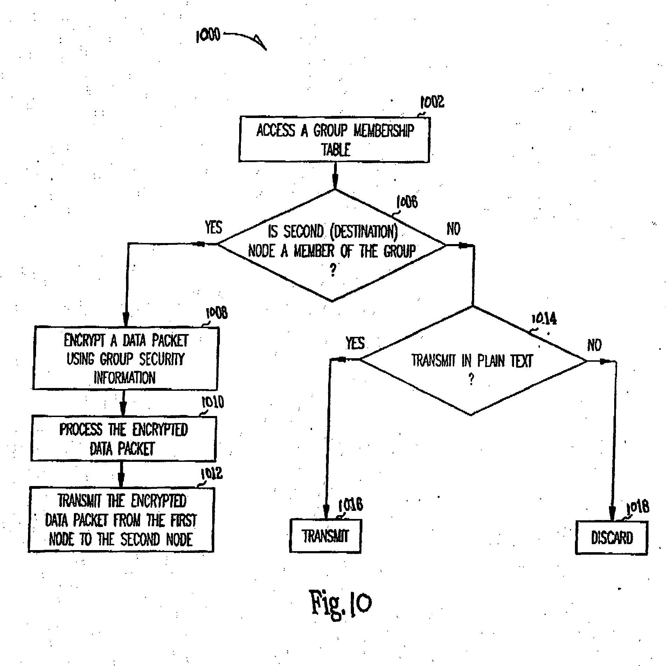

Figure 10 is a flow diagram illustrating a method 1000 for transmitting secure data between a first and a second node in a VPG according to an embodiment of the invention. In the embodiment shown Figure 10 at 1002, a first node accesses a group membership table. The group membership table includes group membership information for each group, including a first group, to which the first node belongs and group security information associated with each group, wherein the first group has two or more members. At 1006, the first node checks the group membership table to determine if the second (receiving) node is a member of the first group. If the second node is a member of the first group, then the first node encrypts a data packet using the goup security information at 1008. At 1010, the first node processes the encrypted data packet, and at 1012, the first node transmits the encrypted data packet to the second node. If, at 1006, the first node determines that the second node is not a member of the first group, control moves to 1014. At 1014, the first node checks to determine if it should transmit data in plaintext to the second node. This will be determined according to the policy established by an administrator. If the policy allows such transmission, then the data will be transmitted as plaintext at 1016. If the policy, however, disallows such transmission, then the data is discarded at 1018.

In one embodiment, the managing of the group membership table includes receiving the group membership table from a policy server over a secure connection. In another embodiment, the managing of the group membership table includes adding a group member to the group membership table or removing a group member from the group membership table. In another embodiment, the managing of the group membership table includes managing a number of group member entries in the group membership table, each group member entry having a node address and group security association information. The group security information includes the group security association information. In another embodiment, the managing of the group membership table includes managing a plurality of group member entries in the group membership table, each group member entry having an Internet Protocol address and group security association information, wherein the group security information includes the group security association information.

In one embodiment, the checking of the group membership table includes checking the group membership table to determine if one of the group member entries for the first group includes the Internet Protocol address of the second node.

In one embodiment, the encrypting of the data packet includes encrypting the data packet using a symmetric encryption algorithm, such as the Data Encryption Standard (DES), triple DES, or the Advanced Encryption Standard (AES). In another embodiment, the encrypting of the data packet includes encrypting the data packet using a group membership key. In another embodiment, the encrypting of the data packet includes encrypting the data packet using a group traffic encryption key. In another embodiment, the encrypting of the data packet includes encapsulating the data packet using an Encapsulating Security Payload header.

In one embodiment, the processing of the encrypted data packet includes adding an Internet Protocol header to the encrypted data packet.

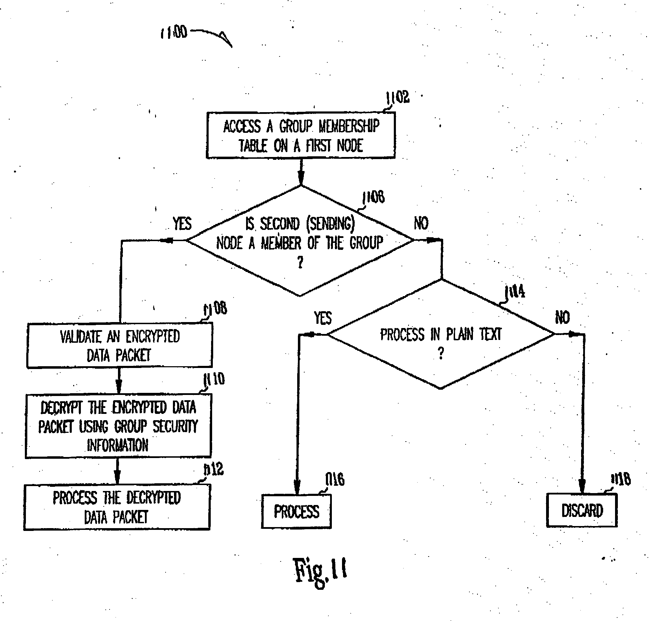

Figure 11 is a flow diagram illustrating a method 1100 for receiving secure data in a VPG which may be used in an embodiment of the invention. A first node accesses a group membership table at 1102. The group membership table includes group membership information for each group, including a first group, to which the first node belongs and group security information associated with each group, wherein the first group has two or more members. At 1106, the first node checks the group membership table to determine if a second (sending) node is a member of the first group. If the second node is a member of the first group, then the first node validates, at 1108, an encrypted data packet that has been sent from the second node. At 1110, the first node decrypts the encrypted data packet using the group security information, and at 11112, the first node processes the decrypted data packet. If, at 1106, the first node determines that the second node is not a member the first group, control moves to 1114. At 1114, the first node checks to determine if it should process data in plaintext from the second node. This will be determined according to the policy established by an administrator. If the policy allows such processing, then the data will be processed as plaintext at 1116. If the policy, however, disallows such processing, then the data is discarded at 1118.

In one embodiment, the manage of the group membership table include receiving the group membership table from a policy server over a secure connection. In another embodiment, the managing of the group membership table includes adding a group member to the group membership table. In another embodiment, the managing of the group membership table includes removing a group member from the group membership table. In mother embodiment, the managing of the group membership table includes managing a plurality of group member entries in the group membership table, each group member entry having a node address and group security association information, wherein the group security information includes the group security association information. In another embodiment, the managing of the group membership table includes managing a plurality of group member entries in the goup membership table, each group member entry having an Internet Protocol address and goup security association information, wherein the group security information includes the group security association information.

In one embodiment, the checking of the group membership table includes checking the group membership table to determine if one of the group member entries for the first group includes the Internet Protocol address of the second node.

In one embodiment, the validating of the encrypted data packet includes authenticating the encrypted data packet using the group security information associated with the first group.

In one embodiment, the decrypting of the encrypted data packet includes decrypting the encrypted data packet using a triple Data Encryption Standard algorithm. In another embodiment the decrypting of the encrypted data packet includes decrypting the encrypted data packet using a group membership key. In another embodiment, the decrypting of the encrypted data packet includes decrypting the encrypted data packet using a group traffic encryption key. In another embodiment, the decrypting of the encrypted data packet includes decrypting the encrypted data packet using an Encapsulating Security Payload header.

In one embodiment, the processing of the decrypted data packet includes filtering the decrypted data packet to detect unauthorized packets.

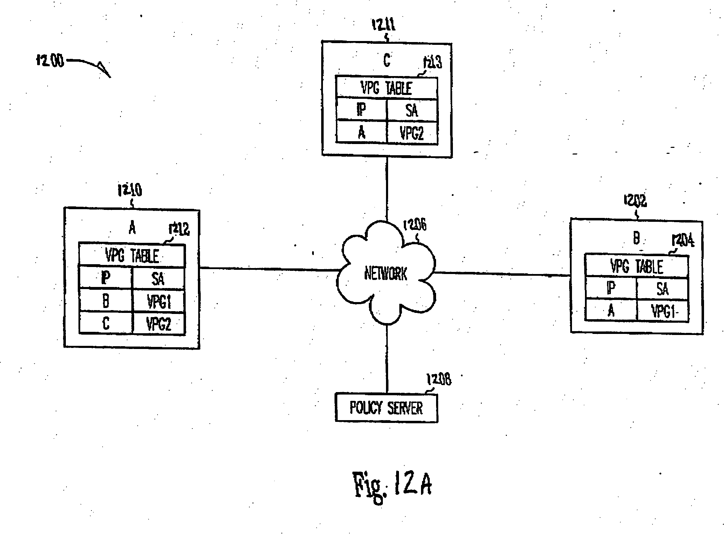

Figure 12A is a network diagram illustrating a VPG system 1200 having multiple nodes which may be used in an embodiment of the invention. VPG system 1200 includes node 1202, network 1206, policy server 1208, node 1210, and node 1211. Node 1202, policy server 1208, node 1210, and node 1211 are each operatively coupled to network 1206. Network 1206 maybe, for instance, the Internet, or it may be a private network. Node 1202 and node 1210 are both members of "VPGI". Node 1210 and node 1211 are both members of "VPG2." Policy server 1208 manages a security policy for the VPG's. Node 1202 includes VPG table 1204. Node 1202 is a member of "VPG1." Each entry in the table includes an Internet Protocol (IP) address of a node that is also a member of a "VPG1," and a reference to security associations associated with this VPG. These security associations are used when encrypting data in for "VPG1." All members of this VPG use the same security association information. In one embodiment, the IP address is a subnet address (in order to identify an entire subnet as a part of a particular VPG). In one embodiment, node 1202 bas a separate VPG table for each VPG that it is a member of (when it is a member of more than one VPG). In another embodiment, code 1202 has a single VPG table that includes data for all VPG's that node 1202 is a member of. In the example shown in Figure 12A, node 1202 includes one VPG table for the VPG labeled "VPG1". VPG table 1204 shows that node "A" (which is node 1210) is also a member of Node 1210 also includes a VPG table. Because node 1210 is also a member of "VPG1", it includes VPG table 1212 having information for "VPG1". VPG table 1212 shows that node "B" (which is node 1202) is included in its list of members. Node "C" is also a member of "VPG2." Therefore, VPG table 1212 also include information for "VPG2," VPG table 1212 shows that node "C" (which is node 1211) is included as a member of "VPG2." Node 1211 also includes VPG table 1213. Because node 1211 is a member of "YPG2," VPG table 1213 includes entries for node "A" (i.e., node 1210), which is also a member of "VPG2." VPG table 1213 does not include any entries for "VPG1," because node 1211 is not a member of "VPG1."

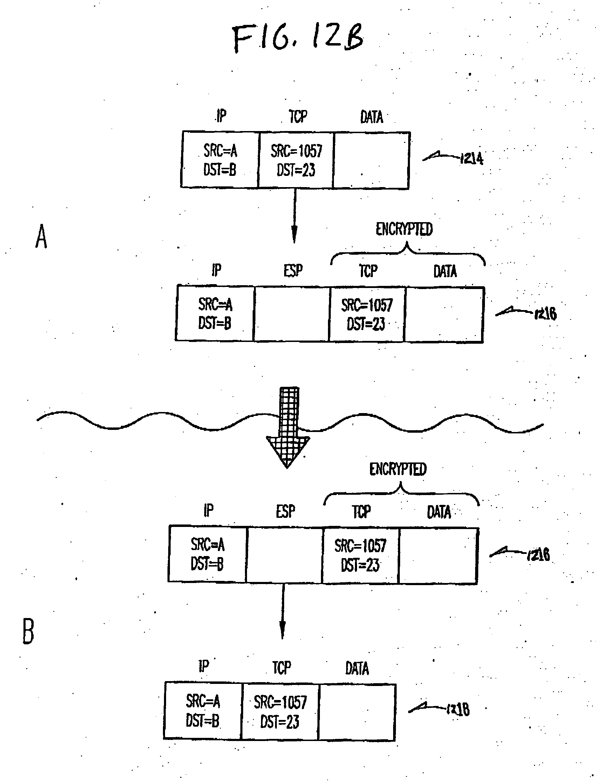

Figure 12B is a packet diagram illustrating a packet-level flow of data in the VPG system shown in Figure 12A. In the example shown in Figure 12B, node 1210 is transmitting data to node 1202. An ESP header provides encryption protection and authentication for an Internet Protocol packet. With VPG's, the policy server handles key exchange, so Internet Key Exchange (IKE) is not done between peers for VPG communication. It is to be noted that checksums, lengths, and next protocol fields are updated accordingly when headers are modified.

When node 1210 (hereinafter node "A"') transmit secure data to node 1202 (hereinafter node "B"), it begins by building packet 1214 in the communication stack on node "A". Packet 1214 includes a data field (i.e. the "payload," at the application layer), a Transmission Control Protocol (TCP) field, and an IP field. The IP field indicates that the source of the transmission is node "A", and that the destination is node "B". The TCP field indicates that the source port of node "A" is port "1057", and that the destination port of node "B" is port "23". Node "A" determines that node "B" is a member of the VPG, and then encrypts the data to build packet 1216. In this embodiment, the data is encrypted using, for instance, a symmetric encryption algorithms, such as DES, triple DES, or AES. This is shown as the Encrypted data field of packet 1216. The TCP field from packet 1214 is copied into packet 1216. An ESP field is added to packet 1216. Finally, an IP field is added in packet 1216 that is a copy of the IP field in packet 1214, except that it includes a next protocol value of VPG. Packet 1216 is transmitted across the Internet network to node "B".

Node "B" receives packet 1216 that has been transmitted across the Internet. Node "B" analyzes the IP field of packet 1216 to determine that node "A" is the sender. Node "B" looks in VPG Table 1204 to determine that the IP address of node "A" is included, and therefore that node "A" is a member of "VPG1". Node "B" verifies the correctness of the encapsulation of packet 1216. Node "B" then decrypts and authenticates packet 1216 based on the ESP and security association information for "VPG1" to create packet 1218. Packet 1218 includes a decrypted data field, a TCP field; and an IP field. The next protocol field in the IP field is set based on the transport header of the original packet.

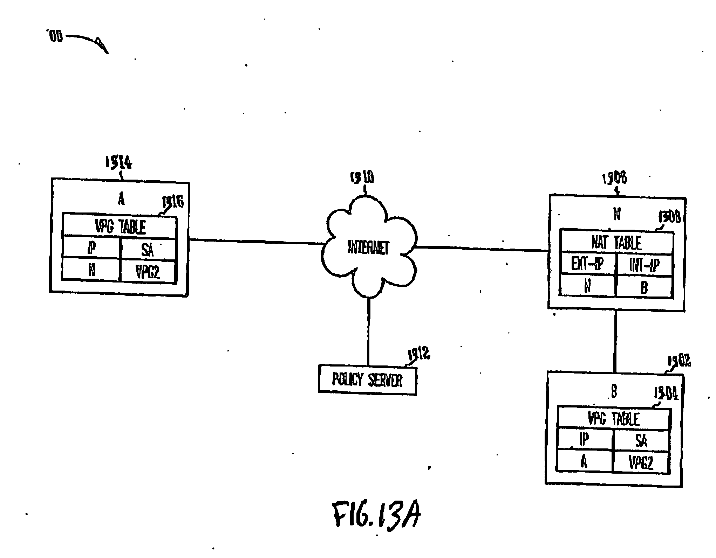

Figure 13A is a network diagram illustrating a VPG system having multiple nodes and a Network Address Translation (NAT) device according to an embodiment of the invention. Network 1300 includes node 1314 (hereinafter node "A"), Internet network 1310, Policy server 1312; Network Address Translator 1306 (hereinafter node "N"), and node 1302 (hereinafter node "B"). Node "A", node "N", node "B", and Policy server 1312 are each operatively coupled through Internet network 1310. Node "A" includes VPG Table 1316. UPG Table 1316 includes information for "VPG2", indicating that node "N" is a member of "VPG2" VPG Table also includes security association information for "VPG2". Because node "B" is behind node "N", (a NAT device), node "A" does not have direct access to, or IP address information for, node "B". Therefore, node "A" only includes IP address information for node "N" in its VPG table. Node "N" includes NAT Table 1308. NAT Table 1308 includes fields for internal IP address information, and external IP address information. NAT Table 1308 helps node "N" route external messages to their appropriate destinations. Node "B" is included in NAT Table 1308. Therefore, node "N" routes any messages sent to the IP address of node "N" to node "B". Node "13" includes VPG Table 1304. VPG Table 1304 includes an IP address of node "A", indicating that node "A" is a member of the virtual private group "VPG2". The role of Policy server 1312 is to provide security policy information to node "A" and node "B", including the VPG tables. Since node "B" is behind a NAT device, a channel through node "N" is opened up so that traffic between Policy server 1312 and node "B" is properly translated.

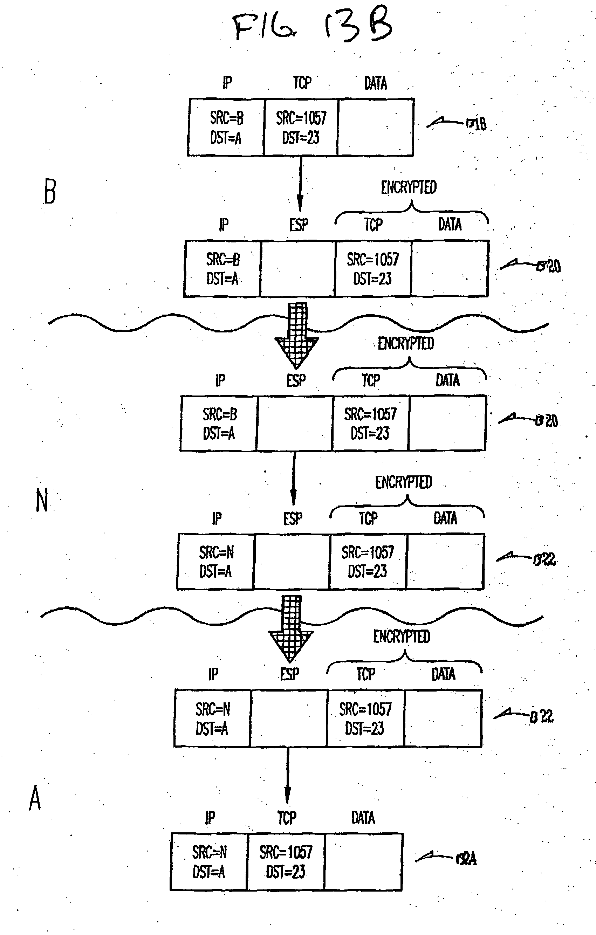

Figure 13B is a packet diagram illustrating a first packet-level flow or data in the VPG system shown in Figure 13A. In the example shown in Figure 13B, node "B" is transmitting data to node "A". Node "B" begins by building packet 1318, which includes a data field, a TCP field, and an IP field. The IP field indicates that the source is node "B" and that the destination is node "A". The TCP field indicates that the source port on node "B" is port "1057", and that the destination port on node "A" is port "23". At the VPG layer, node "B" looks up node "A" in VPG Table 1304 to determine that node "A" is a member of "VPG2" but not behind a NAT device. The VPG layer then builds the ESP encapsulation of the data using the security association information for "VPG2". Packet 1320 includes the encrypted data Packet 1320 also includes a TCP field, as ESP field; and an IP field. The TCP field is copied from packet 1318. Packet 1320 is then transmitted to node "N".

Node "N" inspects packet 1320, makes an entry in NAT Table 1308, and then modifies the packet to appear to have come from node "N". Node "N" builds packet 1322 and transmits across Internet network 1310 to node "A". The modified IP field of packet 1322 indicates that node "N" is the source of transmitted data. This effectively hides the true source IP address of node "B".

Node "A" receives packet 1322. The VPG layer on node "A" looks up node "N" in VPG Table 1316 to verify that node "N" is a member of "VPG2". Node "A" verifies that the packet was properly encapsulated, and then decrypts the data into packet 1324. Packet 1324 includes a decrypted data field, a TCP field, and an IP field. The next protocol field in the IP field is set to match the actual transport layer protocol. Resulting packet 1324 can be sent to an IP layer in node "A".

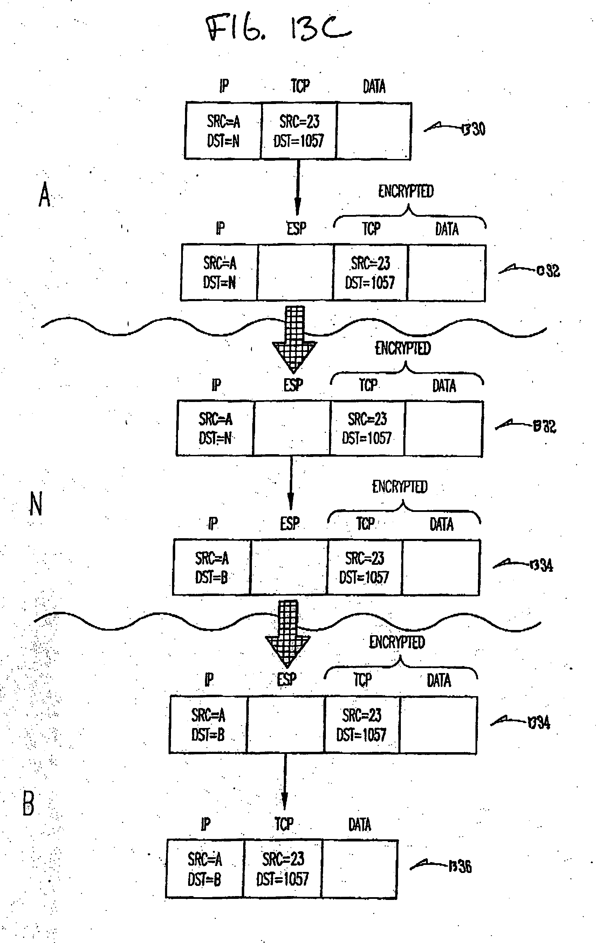

Figure 13C is a packet diagram illustrating a second packet-level flow of data in the VPG system shown in Figure 13A. In the example shown in Figure 13C, node "A" is transmitting data back to node "B". Node "A" begins by building packet 1330, which includes a data field, a TCP field, and an IP field. The IP field indicates that the source is node "A" and that the destination is node "N". This is due to the fact that node "B" is behind node "N" (a NAT device), and only has visibility to node "V". The TCP field, however, includes a destination port of "1057" on node "N", which node "A" includes an the assumption that it will be properly routed to node "B" by the NAT device. At the VPG layer, node "A" looks up node "N" in VPG Table 1316 to determine that node "N" is a member of "VPG2." The VPG layer then builds the ESP encapsulation of them data using the security association information for "VPG2". Packet 1332 includes the encrypted data. Packet 1332 also includes a TCP field, an ESP field, and an IP field. The TCP field is copied from packet 1330. Packet 1332 is then transmitted to node "N" across Internet network 1310.

Node "N" inspects packet 1332. Node "N" references NAT Table 1308 to identify the internet IP address for node "B" Node "N" then builds packet 1334 and transmits it to node "B". Packet 1334 includes a modified IP field the modified IP field of packet 1334 indicates that node "B" is the true intended destination for the data.

Node "B" receives packet 1334. The VPG layer on node "B" looks up node "A" in VPG Table 1304 to verify that node "A" is a member of "VPG2". Node "B" verifies that the packet was properly encapsulated, and then decrypt the data into packet 1336. Packet 1336 includes a decrypted data field, a TCP field, and an IP field. Resulting packet 1336 can be sent to an IP layer in node "B".

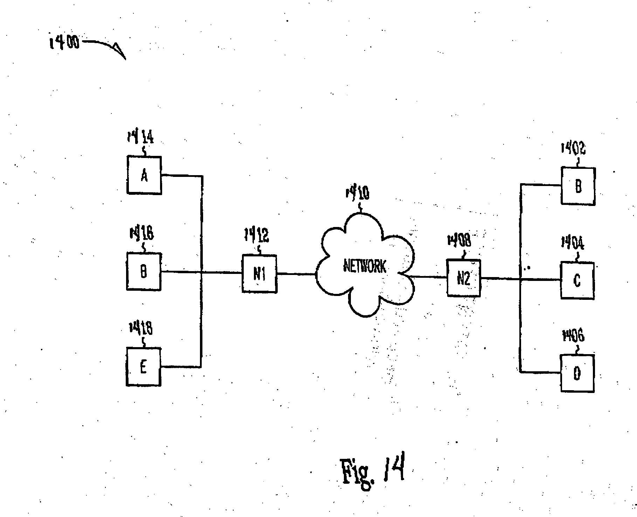

Figure 14 is a network diagram illustrating a VPG system having multiple nodes and multiple NAT devices which may be used in an embodiment of the invention. This embodiment exemplifies the use of a VPG's for communications between remote offices. Network 1400 includes node 1414, node 1416, node 1418, node 1412, network 1410, node 1408, node 1402, node 1404, and node 1406. Nodes 1412 and 1408 are NAT devices. Nodes 1414, 1416, and 1418 arc each coupled to NAT device 1412, and operatively coupled to the Internet network. Nodes 1402, 1404, and 1406 are each coupled to NAT device 1408, and operatively coupled to the Internet network. In this embodiment, the non-NAT nodes represent remote offices in an organisation. In one embodiment, nodes 1414, 1416, and 1418 are members of a first VPG, and nodes 1402, 1404, and 1406 are members of a second VPG. The nodes communicate securely with other members of the group. In another embodiment, nodes 1414 and 1402 are members of a VPG. Even though node 1414 is insulated behind NAT device 1412, and node 1402 insulated behind NAT device 1408, nodes 1414 and 1402 can still be members of a VPG, and can share secure communications over network 1410, In another example embodiment, node 1416 and node 1406 are members of a VPG. Figure 14 is intended to show the flexibility of certain embodiments of VPG's, and to demonstrate how nodes behind NAT devices may still be members of VPG's.

### Methods of Use

There are a number of implementations, or methods of use, of embodiments of a VPG system and protocol. The methods of use described below are a non-exclusive set of examples that illustrate the power and flexibility of these embodiments of a VPG.

In one embodiment, a VPG system is used to protect a single organization or office. This is a common implementation for a VPG. In this embodiment, all hosts within an organization at a particular location would be placed in a single VPG. All traffic among these hosts would be encrypted, and no foreign host could plug into the network and be able to snoop data or transmit data on the organization's network. Further, by making the internal network side of the organization's perimeter firewall a member of the VPG, no host could get to an external network without going through the firewall. For example, to get to the Internet, a host on the internal network must route its packets through the firewall that would decrypt them, apply filtering, and then send plaintext packets to the external network. Since there is no restriction on the number of VPG's that a host can be a member of, it is possible to subdivide the organization into separate VPG's. Hosts in an accounting department could be cryptographically separated from the engineering department by placing them in separate VPG's. Hosts that require access to both networks could be placed in both VPG's. All of this would be transparent to the users and would be centrally managed by a policy server. In one embodiment, a VPG system can also be used for remote offices in an organizational infrastructure.

In another embodiment, a VPG system is used to allow a borne user to telecommute. In this embodiment; a telecommuter may have a Digital Subscriber Line (DSL) connection or cable modem with a NAT device sitting between the home computer and the Internet service provider. A policy server must be visible to the home computer, so that when it boots, it can obtain a VPG policy- When the policy server receives the home computer's request for a VPG table, it also records the external IP address on the NAT device being used for the traffic. Thus, in addition to sending a VPG table to the home computer, the policy server also updates the VPG tables on the other members of the VPG with the IP address to use in packets destined for the home computer through the NAT.

In another embodiment, a VPG system can be used for roaming users. Most organizations have users with laptops that wish to use the organization's computer resources from various remote sites. These machines can pop up anywhere and will have unpredictable IP addresses, and will frequently be behind NAT devices whose external IP addresses are not known in advance. In one implementation, the NAT device is not initially part of the VPG. When the roaming user boots bis or her node behind the NAT device and contacts its policy server to obtain a VPG table, the policy server must authenticate the node, and take note of the IP addresses being used for NAT. Once the node's identity is established, the policy server updates the "VPG tables of the other members of the VPG to include an entry for the NAT device.

In another embodiment, a VPG system is used in wireless Local Area Network (LAN) systems. Multiple group members can communicate securely over the wireless LAN.

In another embodiment, a VPG system is used for managing a secure videoconferencing environment on the Internet or other network. Groups can be dynamically formed for collaboration Group members can be dynamically added and removed, and all traffic is encrypted between specified IP addresses in the group.

Although specific embodiments have been illustrated and described herein, it will be appreciated by those of ordinary skill in the art that any arrangement that is calculated to achieve the same purpose may be substituted for the specific embodiment shown. This application is intended to cover any adaptations or variations of the described embodiments of the present invention, within the scope of the appended claims.

## Claims

1. A method for exchanging secure data between a plurality of nodes (108, 112, 114, 116) configures as one or more virtual private groups, including a first node and a second node, the method comprising:
receiving, on the first node, virtual private group membership data, from a policy server (102), wherein the virtual private group membership data is received over a secure connection, wherein the virtual private group membership data includes a group membership table for the node, a list of shared traffic encryption keys (212), and a group membership key for key encryption, and for securing virtual private group control messages between virtual private group nodes
accessing (1002) the group membership table on the first node, the group membership table having group membership information for each group, including a first group, to which the first node belongs and group security information (104) associated with each group, wherein the first group has two or more members;
checking (1006) the group membership table to determines if a second node is a member of the first group; and
if the second node is a member of the first group,
encrypting (1008) a data packet using a key from the list of shared traffic encryption keys (212) in the group security information (104) associated with the first group,
processing (1010) the encrypted data packet, and
transmitting (1012) the encrypted data packet from the first node to the second node.

2. The method of claim 1, wherein the accessing of the group membership table includes adding a group member to one of the groups.

3. The method of claim 1, wherein the accessing of the group membership table includes removing a group member from one of the groups.

4. The method of claim 1, wherein the accessing of group membership table includes managing a plurality of group member entries for each group in the group membership table, each group member entry having a node address and group security association information.

5. The method of claim 1, wherein the accessing of the group membership table includes managing a plurality of group member entries for each group in the group membership table, each group member entry having an Internet Protocol address and group security association information.

6. The method of claim 5, wherein the checking of the group membership table includes checking the group membership table to determine if one of the group member entries for the first group includes the Internet Protocol address of the second node.

7. The method of claim 1, wherein the encrypting of the data packet includes encrypting the data packet using a symmetric encryption algorithm.

8. The method of claim 1, wherein the encrypting of the data packet includes encapsulating the data packet using an Encapsulating Security Payload header.

9. The method of claim 1, wherein the processing of the encrypted data packet includes adding an Internet Protocol header to the encrypted data packet.

10. The method of claim 1, further comprising:
checking the group membership table to verify that the other nodes are members of the virtual private group; and
upon such verification,
encrypting data using a key from the list of shared traffic encryption keys (212) in the group security information associated with the virtual private group,
processing the encrypted data packet, and
transmitting the encrypted data packet from the first node to each of the other nodes in the virtual private group.

11. The method of claim 10, further comprising:
receiving encrypted data packet from a second node at the first node; and
on the first node, performing one or more of validating, decrypting and processing the encrypted data packet.

12. The method of claim 10, further comprising:
receiving the encrypted data packet from the first node at a second node; and
on the second node, performing one or more of validating, decrypting and processing the encrypted data packet.

13. The method of claim 11 or claim 12, wherein the validating of the encrypted data packet includes authenticating the encrypted data packet using a key from the list of shared traffic encryption keys (212) in the group security information (104) associated with the first group.

14. The method or claim 11 or claim 12, wherein the decrypting of the encrypted data packet includes decrypting the encrypted data packet musing a symmetric encryption algorithm.

15. The method of claim 11 or claim 12, wherein the decryption of the encrypted data packet includes decrypting the encrypted data packet using an Encapsulating Security Payload header.

16. The method of claim 11 or claim 12, wherein the processing of the decrypted data packet includes filtering the decrypted data packet to detect unauthorized packets.

17. A node (108, 112, 114, 116) for exchanging secure data with a device within a virtual private group, the node comprising:
a processor (126);
a memory (124); and
a computer-readable medium having computer-executable instructions stored thereon, the computer-executable instructions to be executed by the processor from the memory to:
receive, on the node, virtual private group membership data, from a policy server (102), wherein the virtual private group membership data is received over a secure connection, wherein the virtual private group membership data includes a group membership table for the node, a group membership key for key encryption and for securing virtual private group control messages between virtual private group nodes, and a list of shared traffic encryption keys (212);
access (1002) the group membership table on the node, the group membership table having group membership information for each group, including a first group, to which the node belongs and group security information (104) associated with each group, wherein the first group has two or more members;
verify (1006) from the group membership table that the device is also a member of the first group;
encrypt (1008) a data packet using a key from the list of shard traffic encryption keys (212) in the group security information (104) associated with the first group;
process (1010) the encrypted data packet; and
transmit (1012) the encrypted data packet to the device.

18. The node of claim 17, wherein the group membership table includes a plurality of group member entries for each group, and wherein each group member entry includes a node address and group security association information.

19. The node of claim 17, wherein the group membership table includes a plurality of group member entries for each group, and wherein each group member entry includes an Internet Protocol address and group security association information.

20. The node of claim 17, wherein the computer executable instructions further include instructions to be executed by the processor from the memory to:
validate an encrypted data packet that has been sent from the device;
decrypt the encrypted data packet using the group security information associated with the first group; and
process the decrypted data packet.

21. A system for secure group communications, the system comprising:
a communication network;
a policy server (102) coupled to the communication network, the policy server (102) having:
a secure interface, and
a security policy; and
a plurality of group nodes (108, 112, 114, 116) including the node of any one of claims 17 to 20, the secure connections of the group nodes being operatively coupled to the secure interface of the policy server through the communication network, wherein each of the group nodes is assigned to one or more virtual private groups,
wherein the security policy includes virtual private group membership data for each of the plurality of group nodes,
wherein the group nodes are configured to receive a copy of the security policy, the security policy including the group membership key for key encryption and for securing virtual private group control messages between virtual private group nodes, and the list of shared traffic encryption keys (212) of the virtual private group membership data; and
wherein each group node is configured to use the security policy, the virtual private group membership data and the encryption keys therein to securely communicate with another group node.

22. A carrier medium carrying computer readable code for controlling a computer to carry out the method of any one of Claims 1 to 16.

## Patentansprüche

1. Verfahren zum Austauschen von sicheren Daten zwischen einer Mehrzahl von Knoten (108, 112, 114, 116), die als eine oder mehrere virtuelle private Gruppen konfiguriert sind, enthaltend einen ersten Knoten und einen zweiten Knoten, wobei das Verfahren umfasst:
Empfangen von Daten zur Mitgliedschaft in virtuellen privaten Gruppen am ersten Knoten von einem Richtlinienserver (102), wobei die Daten zur Mitgliedschaft in virtuellen privaten Gruppen über eine sichere Verbindung empfangen werden, wobei die Daten zur Mitgliedschaft in virtuellen privaten Gruppen eine Gruppenmitgliedschaftstabelle für den Noten, eine Liste von gemeinsam genutzten Verkehrsverschlüsselungsschlüsseln (212) und einen Gruppenznitgliedsehaftsscblüssel für die Schlüsselverschlüsselung und für das Sichern von Steuerungsnachrichten für virtuelle private Gruppen zwischen Knoten virtueller privater Gruppen enthalten,
Zugreifen (1002) auf die Gruppenmitgliedschaftstabelle am ersten Knoten, wobei die Gruppenmitgliedschaftstabelle Gruppenmitgliedschaftsinformationen für jede Gruppe aufweist, enthaltend eine erste Gruppe, zu der der erste Knoten gehört, und wobei Gruppensicherheitsinformationen (104) mit jeder Gruppe assoziiert sind, wobei die erste Gruppe zwei oder mehrere Mitglieder aufweist;
Überprüfen (1006) der Gruppenmitgliedschaftstabelle, um zu bestimmen, ob ein zweiter Knoten ein Mitglied der ersten Gruppe ist; und
wenn der zweite Knoten ein Mitglied der ersten Gruppe ist,
Verschlüsseln (1008) eines Datenpakets unter Verwendung eines Schlüssels aus der Liste von gemeinsam genutzten Verkehrsverschlüsselungsschlüsseln (212) in den Gruppensicherheitsinformationen (104), die mit der ersten Gruppe assoziiert sind,
Verarbeiten (1010) des verschlüsselten Datenpakets, und
Übertragen (1012) des verschlüsselten Datenpakets vom ersten Knoten zum zweiten Knoten.

2. Verfahren nach Anspruch 1, wobei das Zugreifen auf die Gruppenmitgliedschaftstabelle das Hinzufügen eines Gruppenmitglieds zu einer der Gruppen umfasst.

3. Verfahren nach Anspruch 1, wobei das Zugreifen auf die Gruppemnitgliedschaftstabelle das Entfernen eines Gruppenmitglieds aus einer der Gruppen umfasst.

4. Verfahren nach Anspruch 1, wobei das Zugreifen auf die Gruppenmitgliedschaftstabelle das Verwalten einer Mehrzahl von Gruppenmitgliedseinträgen für jede Gruppe in der Gruppenmitgliedschaftstabelle umfasst, wobei jeder Gruppenmitgliedseintrag eine Knotenadresse und Gruppensicherheitsassoziationsinformationen aufweist.

5. Verfahren nach Anspruch 1, wobei das Zugreifen auf die Gruppenmitgliedschaftstabelle das Verwalten einer Mehrzahl von Gruppenmitgliedseinträgen für jede Gruppe in der Gruppenmitgliedschaftstabelle umfasst, wobei jeder Gruppenmitgliedseintrag eine Internetprotokolladresse und Gruppensicherheitsassoziationsinformationen umfasst.

6. Verfahren nach Anspruch 5, wobei das Überprüfen der Gruppenmitgliedschaftstabelle das Überprüfen der Gruppenmitgliedschaftstabelle umfasst, um zu bestimmen, ob einer der Gruppemnitgliedseinträge für die erste Gruppe die Internetprotokolladresse des zweiten Knoten enthält.

7. Verfahren nach Anspruch 1, wobei das Verschlüsseln des Datenpakets das Verschlüsseln des Datenpakets unter Verwendung eines symmetrischen Verschlüsselungsalgorithmus umfasst.

8. Verfahren nach Anspruch 1, wobei das Verschlüsseln des Datenpakets das Kapseln des Datenpakets unter Verwendung eines Encapsulating Security Payload-Headers umfasst.

9. Verfahren nach Anspruch 1, wobei das Verarbeiten des verschlüsselten Datenpakets das Hinzufügen eines Internetprotokoll-Headers zum verschlüsselten Datenpaket umfasst.

10. Verfahren nach Anspruch 1, ferner umfassend:
Überprüfen der Gruppenmitgliedschaftstabelle, um zu verifizieren, dass die anderen Knoten Mitglieder der virtuellen privaten Gruppe sind; und
nach einer solchen Verifizierung
Verschlüsseln der Daten unter Verwendung eines Schlüssels aus der Liste von gemeinsam genutzten Verkehrsverschlüsselungsschlüsseln (212) in den Gruppensicherheitsinformationen, die mit der virtuellen privaten Gruppe assoziiert sind,
Verarbeiten des verschlüsselten Datenpakets, und
Übertragen des verschlüsselten Datenpakets vom ersten Knoten zu jedem der anderen Knoten in der virtuellen privaten Gruppe.

11. Verfahren nach Anspruch 10, ferner umfassend:
Empfangen eines verschlüsselten Datenpakets von einem zweiten Knoten am ersten Knoten; und
Durchführen von einem oder mehreren von Validieren, Entschlüsseln und Verarbeiten des verschlüsselten Datenpakets am ersten Knoten.

12. Verfahren nach Anspruch 10, ferner umfassend:
Empfangen des verschlüsselten Datenpakets vom ersten Knoten an einem zweiten Knoten; und
Durchführen von einem oder mehreren von Validieren, Entschlüsseln und Verarbeiten des verschlüsselten Datenpakets am zweiten Knoten.

13. Verfahren nach Anspruch 11 oder 12, wobei das Validieren des verschlüsselten Datenpakets das Authentifizieren des verschlüsselten Datenpakets unter Verwendung eines Schlüssels aus der Liste von gemeinsam genutzten Verschlüsselungsschlüsseln (212) in den Gruppensicherheitsinformationen (104), die mit der ersten Gruppe assoziiert sind, umfasst.

14. Verfahren nach Anspruch 11 oder 12, wobei das Entschlüsseln des verschlüsselten Datenpakets das Entschlüsseln des verschlüsselten Datenpakets unter Verwendung eines symmetrischen verschlüsseiungsalgorithmus umfasst.

15. Verfahren nach Anspruch 11 oder 12, wobei das Entschlüsseln des verschlüsselten Datenpakets das Entschlüsseln des verschlüsselten Datenpakets unter Verwendung eines Encapsulating Security Payload-Headers umfasst.

16. Verfahren nach Anspruch 11 oder 12, wobei das Verarbeiten des entschlüsselten Datenpakets das Filtern des entschlüsselten Datenpakets umfasst, um nicht-autorisierte Pakete zu detektieren,

17. Knoten (108, 112, 114, 116) zum Austauschen von sicheren Daten mit einer Vorrichtung innerhalb einer virtuellen privaten Gruppe, wobei der Knoten umfasst:
einen Prozessor (126);
einen Speicher (124); und
ein computerlesbares Medium, auf dem computerausführbare Anweisungen gespeichert sind, wobei die computerausführbaren Anweisungen durch den Prozessor vom Speicher auszuführen sind, um:
am Knoten Daten zur Mitgliedschaft in virtuellen Gruppen von einem Richtlimenserver (102) zu empfangen, wobei die Daten zur Mitgliedschaft in virtuellen Gruppen über eine sichere Verbindung empfangen werden, wobei die Daten zur Mitgliedschaft in virtuellen privaten Gruppen eine Gruppenmitgliedschaftstabelle für den Knoten, einen Gruppenmitgliedschaftsschlüssel für die Schlüsselverschlässdung und für das Sichern von Steuerungsnachrichten für virtuelle private Gruppen zwischen Knoten virtueller privater Gruppen und eine Liste von gemeinsam genutzten Verkehrsverschlüsselungsschlüsseln (212) enthalten,
auf die Gruppenmitgliedschaftstabelle am Knoten zuzugreifen (1002), wobei die Gruppenmitgliedschaftstabelle Gruppenmitgliedschaftsinformationen für jede Gruppe aufweist, enthaltend eine erste Gruppe, zu der der erste Knoten gehört, und wobei Gruppensicherheitsinformationen (104) mit jeder Gruppe assoziiert sind, wobei die erste Gruppe zwei oder mehrere Mitglieder aufweist;
anhand der Gruppenmitgliedschaftstabelle zu verifizieren (1006), dass die Vorrichtung auch ein Mitglied der ersten Gruppe ist; und
ein Datenpaket unter Verwendung eines Schlüssels aus der Liste von gemeinsam genutzten Verkehrsverschlüsselungsschlüsseln (212) in den Gruppensicherheitsinformationen (104), die mit der ersten Gruppe assoziiert sind, zu verschlüsseln (1008),
das verschlüsselte Datenpaket zu verarbeiten (1010), und
das verschlüsselte Datenpaket zur Vorrichtung zu übertragen (1012).

18. Knoten nach Anspruch 17, wobei die Gruppenmitgliedschaftstabelle eine Mehrzahl von Gruppenmitgliedseinträgen für jede Gruppe umfasst, und wobei jeder Gruppenmitgliedseintrag eine Knotenadresse und Gruppensicherheitsassoziationsinformationen umfasst.

19. Knoten nach Anspruch 17, wobei die Gruppenmitgliedschaftstabelle eine Mehrzahl von Gruppenmitgliedseinträgen für jede Gruppe umfasst, und wobei jeder Gruppenmitgliedseintrag eine Internetprotokolladresse und Gruppensicherheitsassoziationsinformationen umfasst.

20. Knoten nach Anspruch 17, wobei die computerausführbaren Anweisungen ferner Anweisungen umfassen, die durch den Prozessor vom Speicher auszuführen sind, um:
ein verschlüsseltes, von der Vorrichtung gesendetes Datenpaket zu validieren;
das verschlüsselte Datenpaket unter Verwendung der Gruppensicherheitsinformationen, die mit der ersten Gruppe assoziiert sind, zu entschlüsseln; und
das entschlüsselte Datenpaket zu verarbeiten.

21. System für sichere Gruppenkommunikation, wobei das System umfasst:
ein Kommunikationsnetzwerk;
einen Richtlinienserver (102), der mit dem Kommunikationsnetzwerk verbunden ist, wobei der Richtlinienserver (102) aufweist:
eine sichere Schnittstelle, und
eine Sicherheitsrichtlinie, und
eine Mehrzahl von Gruppenknoten (108, 112, 114, 116), die den Knoten nach einem der Ansprüche 17 bis 20 enthalten, wobei die sicheren Verbindungen der Gruppenknoten über das Kommunikationsnetzwerk funktionsfähig mit der sicheren Schnittstelle des Richtlinienservers verbunden sind, wobei jeder der Gruppenknoten einer oder mehreren virtuellen privaten Gruppen zugeordnet ist,
wobei die Sicherheitsrichtlinie Daten zur Mitgliedschaft in virtuellen privaten Gruppen für jeden der Mehrzahl von Gruppenknoten enthält,
wobei die Gruppenknoten konfiguriert sind, um eine Kopie der Sicherheitsrichtlinie zu empfangen, wobei die Sicherheitsrichtlinie den Gruppenmitgliedschaftsschlüssel für die Schlüsselentschlüsselung und für das Sichern von Steuerungsnachrichten für virtuelle private Gruppen zwischen Knoten virtueller privater Gruppen und die Liste von gemeinsam genutzten Verkehrsverschlüsselungsschlüsseln (212) der Daten zur Mitgliedschaft in virtuellen privaten Gruppen enthält; und
wobei jeder Gruppenknoten konfiguriert ist, um die Sicherheitsrichtlinie, die Daten zur Mitgliedschaft in virtuellen privaten Gruppen und die Verschlüsselungsschlüssel darin zu verwenden, um sicher mit anderen Gruppenknoten zu kommunizieren.

22. Trägermedium, das einen computerlesbaren Code für das Steuern eines Computers trägt, um das Verfahren nach einem der Ansprüche 1 bis 16 auszuführen.

## Revendications

1. Procédé destiné à échanger des données sécurisées entre une pluralité de noeuds (108, 112, 114, 116) configurés sous la forme d'un ou plusieurs groupes privés virtuels, incluant un premier noeud et un second noeud, le procédé comprenant les étapes ci-dessous consistant à :
recevoir, sur le premier noeud, des données d'abonnement de groupes privés virtuels, en provenance d'un serveur de règles (102), dans lequel les données d'abonnement de groupes privés virtuels sont reçues sur une connexion sécurisée, dans lequel les données d'abonnement de groupes privés virtuels incluent une table d'abonnements de groupes pour le noeud, une liste de clés de chiffrement de trafic partagées (212), et une clé d'abonnement de groupes pour le chiffrement de clés et pour sécuriser des messages de commande de groupes privés virtuels entre des noeuds de groupes privés virtuels ;
accéder (1002) à la table d'abonnements de groupes sur le premier noeud, la table d'abonnements de groupes présentant des informations d'abonnement de groupes pour chaque groupe, notamment un premier groupe, auquel appartient le premier noeud, et des informations de sécurité de groupes (104) associées à chaque groupe, dans lequel le premier groupe comprend deux membres ou plus ;
vérifier (1006) la table d'abonnements de groupes en vue de déterminer si un second noeud est un membre du premier groupe ; et
si le second noeud est un membre du premier groupe ;
chiffrer (1008) un paquet de données en utilisant une clé de la liste de clés de chiffrement de trafic partagées (212) dans les informatisons de sécurité de groupes (104) associées au premier groupe ;
traiter (1010) le paquet de données chiffré ; et
transmettre (1012) le paquet de données chiffré du premier noeud au second noeud.

2. Procédé selon la revendication 1, dans lequel l'étape consistant à accéder à la table d'abonnements de groupes comprend l'étape consistant à ajouter un membre de groupe à l'un des groupes.

3. Procédé selon la revendication 1, dans lequel l'étape consistant à accéder à la table d'abonnements de groupes comprend l'étape consistant à supprimer un membre de groupe de l'un des groupes.

4. Procédé selon la revendication 1, dans lequel l'étape consistant à accéder à la table d'abonnements de groupes comprend l'étape consistant à gérer une pluralité d'entrées de membre de groupe pour chaque groupe dans la table d'abonnements de groupes, chaque entrée de membre de groupe comportant une adresse de noeud et des informations d'association de sécurité de groupe.

5. Procédé selon la revendication 1, dans lequel l'étape consistant à accéder à la table d'abonnements de groupes comprend l'étape consistant à gérer une pluralité d'entrées de membre de groupe pour chaque groupe dans la table d'abonnements de groupes, chaque entrée de membre de groupe comportant une adresse de protocole Internet et des informations d'association de sécurité de groupe.

6. Procédé selon la revendication 5, dans lequel l'étape consistant à vérifier la table d'abonnements de groupes consiste à vérifier la table d'abonnements de groupes en vue de déterminer si l'une des entrées de membre de groupe pour le premier groupe comprend adresse de protocole Internet du second noeud.

7. Procède selon la revendication 1, dans lequel l'étape consistant à chiffrer le paquet de données consiste à chiffrer le paquet de données en faisant appel à un algorithme de chiffrement symétrique.

8. Procédé selon la revendication 1, dans lequel l'étape consistant à chiffrer le paquet de données comprend l'étape consistant à encapsuler le paquet de données en faisant appel à un en-tête d'encapsulation de charge utile de sécurité.

9. Procédé selon la revendication 1, dans lequel l'étape consistant à traiter le paquet de données chiffrer comprend l'étape consistant à ajouter un en-tête de protocole Internet au paquet de données chiffré.

10. Procédé selon la revendication 1, comprenant en outre les étapes ci-dessous consistant à :
vérifier la table d'abonnements de groupes en vue de vérifier que les autres noeuds sont des membres du groupe privé virtuel ; et
suite à ladite vérification,
chiffrer les données en utilisant une clé de la liste de clés de chiffrement de trafic partagées (212) dans les informations de sécurité de groupes associées au groupe privé virtuel,
traiter le paquet de données chiffré ; et
transmettre le paquet de données chiffré du premier noeud à chacun des autres noeuds dans le groupe privé virtuel.

11. Procédé selon la revendication 10, comprenant en outre les étapes ci-dessous consistant à :
recevoir un paquet de données chiffré en provenance d'un second noeud au niveau du premier noeud; et
au niveau du premier noeud, mettre en oeuvre une ou plusieurs parmi les étapes de validation déchiffrement et traitement du paquet de données chiffré.

12. Procédé selon la revendication 10, comprenant en outre les étapes ci-dessous consistant à :
recevoir le paquet de données chiffré en provenance du premier noeud au niveau d'un second noeud; et
au niveau du second noeud, mettre en oeuvre une ou plusieurs parmi les étapes de validation, déchiffrement et traitement du paquet de données chiffré.

13. Procédé selon la revendication 11 ou 12, dans lequel l'étape consistant à valider le paquet de données chiffré comprend l'étape consistant à authentifier le paquet de données chiffré en utilisant une clé de la liste de clés de chiffrement de trafic partagées (212) dans les informations de sécurité de groupes (104) associées au premier groupe.

14. Procédé selon la revendication 11 ou 12, dans lequel l'étape consistant à déchiffrer le paquet de données chiffré consiste à déchiffrer le paquet de données chiffré en utilisant un algorithme de chiffrement symétrique.

15. Procédé selon la revendication 11 ou 12, dans lequel l'étape consistant à déchiffrer le paquet de données chiffré consiste à déchiffrer le paquet de données chiffré en utilisant un en-tête d'encapsulation de charge utile de sécurité.

16. Procédé selon la revendication 11 ou 12, dans lequel l'étape consistant à traiter le paquet de données déchiffré comprend l'étape consistant à fileter le paquet de données déchiffré en vue de détecter les paquets non autorisés.

17. Noeud (108, 112, 114, 116) destiné à échanger des données sécurisées avec un dispositif au sein d'un groupe privé virtuel, le noeud comprenant:
un processeur (126) ;
une mémoire (124) ; et
un support lisible par ordinateur présentant des instructions exécutables par ordinateur stockées dans celui-ci, les instructions exécutables par ordinateur étant destinées à être exécutées par le processeur à partir de la mémoire en vue de :
recevoir, sur le noeud, des données d'abonnement de groupes privés virtuels, en provenance d'un serveur de règles (102), dans lequel les données d'abonnement de groupes privés virtuels sont reçues sur une connexion sécurisée, dans lequel les données d'abonnement de groupes privés virtuels incluent une table d'abonnements de groupes pour le noeud, une clé d'abonnement de groupes pour le chiffrement de clés et pour sécuriser des messages de commande de groupes privés virtuels entre des noeuds de groupes privés virtuels, et une liste de clés de chiffrement de trafic partagées (212) ;
accéder (1002) à la table d'abonnements de groupes sur le noeud, la table d'abonnements de groupes présentant des informations d'abonnement de groupes pour chaque groupe, notamment un premier groupe, auquel appartient le noeud, et des informatisons de sécurité de groupes (104) associées à chaque groupe, dans lequel le premier groupe comprend deux membres ou plus ;
vérifier (1006) dans la table d'abonnements de groupes que le dispositif est également un membre du premier groupe ; et
chiffrer (1008) un paquet de données en utilisant une clé de la liste de clés de chiffrement de trafic partagées (212) dans les informations de sécurité de groupes (104) associées au premier groupe ;
traiter (1010) le paquet de données chiffré ; et
transmettre (1012) le paquet de données chiffré au dispositif.

18. Noeud selon la revendication 17, dans lequel la table d'abonnements de groupes comprend une pluralité d'entrées de membre de groupe pour chaque groupe, et dans lequel chaque entrée de membre de groupe comprend une adresse de noeud et des informations d'association de sécurité de groupe.

19. Noeud selon la revendication 17, dans lequel la table d'abonnements de groupes comprend une pluralité d'entrées de membre de groupe pour chaque groupe, et dans lequel chaque entrée de membre de groupe comprend une adresse de protocole Internet et des informatisons d'association de sécurité de groupe.

20. Noeud selon la revendication 17, dans lequel les instructions exécutables par ordinateur comprennent en outre des instructions destinées à être exécutées par le processeur à partir de la mémoire en vue de :
valider un paquet de données chiffré qui a été envoyé à partir du dispositif ;
déchiffrer le paquet de données chiffré en utilisant les informations de sécurité de groupes associées au premier groupe ; et
traiter le paquet de données déchiffré.

21. Système destiné à mettre en oeuvre des communications de groupe sécurisées, le système comprenant :
un réseau de communication ;
un serveur de règles (102) couplé au réseau de communication, le serveur de règles (102) présentant :
une interface sécurisée ; et
une règle de sécurité ; et
une pluralité de noeuds de groupes (108, 112, 114, 116) comprenant le noeud selon l'une quelconque des revendications 17 à 20, les connexions sécurisées des noeuds de groupes étant fonctionnellement couplées à l'interface sécurisée du serveur de règles par l'intermédiaire du réseau de communication, dans lequel chacun des noeuds de groupes est affecté à un ou plusieurs groupes privés virtuels ;
dans lequel la règle de sécurité comprend des données d'abonnement de groupes privés virtuels pour chacun de la pluralité de noeuds de groupes ;
dans lequel les noeuds de groupes sont configurés de manière à recevoir une copie de la règle de sécurité, la règle de sécurité comprenant la clé d'abonnement de groupes de chiffrement de clés, pour sécuriser des messages de commande de groupes privés virtuels entre les noeuds de groupes privés virtuels, et la liste de clés de chiffrement de trafic partagées (212) des données d'abonnement de groupes privés virtuels; et
dans lequel chaque noeud de groupes est configuré de manière à utiliser la règle de sécurité, les données d'abonnement de groupes privés virtuels et les clés de chiffrement en vue de communiquer en toute sécurité avec un autre noeud de groupes.

22. Support de transport transportant un code lisible par ordinateur en vue de commander à un ordinateur de mettre en oeuvre le procédé selon l'une quelconque des revendications 1 à 16.
